# EUROPEAN PATENT APPLICATION

(11) **EP 4 040 108 A1**
(43) Date of publication of application: **10.08.2022**
(21) Application number: 20872538.2
(22) Date of filing: 07.07.2020
(51) Int. Cl.: G01C 3/06, G01S 17/10, G01S 17/89

(54) **DISTANCE MEASUREMENT DEVICE AND CONTROL METHOD**

(30) Priority: 01.10.2019 JP 2019181645
(71) Applicant: Panasonic Intellectual Property Management Co., Ltd., Osaka-shi, Osaka 540-6207 (JP)
(72) Inventor: INADA, Yasuhisa, Osaka-shi, Osaka 540-6207 (JP); KIYOHARA, Tokuzou, Osaka-shi, Osaka 540-6207 (JP); KATO, Yumiko, Osaka-shi, Osaka 540-6207 (JP)
(74) Representative: Grünecker Patent- und Rechtsanwälte PartG mbB
(86) International application number: PCT/JP2020/026581
(87) International publication number: WO 2021/065138

(57) **Abstract**

A ranging apparatus includes a light emitting apparatus, a light receiving apparatus, and a processing circuit that controls the light emitting apparatus and the light receiving apparatus and that processes a signal outputted from the light receiving apparatus. The processing circuit causes the light emitting apparatus to emit first light that illuminates a first range in a scene, causes the light receiving apparatus to detect first reflected light produced by illumination with the first light and output first detection data, determines, on the basis of the first detection data, one or more second ranges that are narrower than the first range, causes the light emitting apparatus to emit second light that illuminates the second ranges, causes the light receiving apparatus to detect second reflected light produced by illumination with the second light and output second detection data, and generates and outputs distance data on the second regions on the basis of the second detection data.

## Description

### Technical Field

The present disclosure relates to a ranging apparatus and a control method.

### Background Art

There have conventionally been proposed various types of device that shine light on an object, detect reflected light from the object, and thereby acquire data regarding the position of or distance to the object.

For example, PTL 1 discloses an object detection apparatus including a light projecting system including a light source, a light receiving system including a photodetector that receives light emitted from the light projecting system and reflected off an object, a signal processing system to which an output signal from the photodetector is inputted, and a control system. The control system sets at least one region as a region of interest within a range of projection of the light projecting system, and exercises control so that light projection conditions for the light projecting system or processing conditions for the signal processing system vary between the time when light is projected onto the region of interest and the time when light is projected onto a region other than the region of interest.

PTL 2 discloses a lidar (light detection and ranging) apparatus. The lidar apparatus includes a first beam scanner, a second beam scanner, and a controller. The first beam scanner scans a first region with a first laser beam of a first scan pattern. The second beam scanner scans, with a second laser beam of a second scan pattern, a second region that is narrower than the first region. The controller drives the first beam scanner to scan the first region and acquires data on reflected light produced by the first laser beam. Then, the controller determines one or more physical objects from the data, drives the second beam scanner to pass light across the second region, and thereby monitors the physical objects.

PTL 3 discloses a ranging imaging apparatus. On the basis of a signal outputted from an image sensor that detects passive light, the ranging imaging apparatus identifies, from the whole imaging target area, a subject that requires ranging. Then, the ranging imaging apparatus illuminates the subject with laser light, and detects a reflection of the laser light, and thereby measures the distance to the subject.

PTL 4 discloses an apparatus that scans a space with an optical beam, receives reflected light from an object with an image sensor, and acquires distance information.

### Citation List

### Patent Literature

PTL 1: Japanese Unexamined Patent Application Publication No. 2017-173298
PTL 2: U.S. Patent No. 10061020
PTL 3: Japanese Unexamined Patent Application Publication No. 2018-185342
PTL 4: U.S. Patent Application Publication No. 2018/0217258

### Summary of Invention

### Technical Problem

The present disclosure provides technologies that make it possible to efficiently acquire distance data on a particular region in a ranging target scene.

### Solution to Problem

A ranging apparatus according to an aspect of the present disclosure includes a light emitting apparatus that is capable of emitting multiple types of light having different extents of divergence, a light receiving apparatus that detects reflected light based on the light emitted by the light emitting apparatus, and a processing circuit that controls the light emitting apparatus and the light receiving apparatus and that processes a signal outputted from the light receiving apparatus. The processing circuit causes the light emitting apparatus to emit first light that illuminates a first range in a scene. The processing circuit causes the light receiving apparatus to detect first reflected light produced by illumination with the first light and output first detection data. The processing circuit determines, on the basis of the first detection data, one or more second ranges that are narrower than the first range. The processing circuit causes the light emitting apparatus to emit second light that illuminates the second ranges and that is smaller in extent of divergence than the first light. The processing circuit causes the light receiving apparatus to detect second reflected light produced by illumination with the second light and output second detection data. The processing circuit generates and outputs distance data on the second regions on the basis of the second detection data.

It should be noted that general or specific embodiments may be implemented as a system, an apparatus, a method, an integrated circuit, a computer program, a storage medium such as a computer-readable storage disc, or any selective combination thereof. The computer-readable storage medium may include a volatile storage medium, or may include a nonvolatile storage medium such as a CD-ROM (compact disc-read-only memory). The apparatus may be constituted by one or more apparatuses. In a case where the apparatus is constituted by two or more apparatuses, the two or more apparatuses may be placed within one piece of equipment, or may be placed separately in each of two or more separate pieces of equipment. The term "apparatus" as used herein or in the claims may not only mean one apparatus but also mean a system composed of a plurality of apparatuses.

### Advantageous Effects of Invention

Embodiments of the present disclosure make it possible to efficiently acquire distance data on a particular region in a raging target scene.

### Brief Description of Drawings

[Fig. 1] Fig. 1 is a diagram showing a basic configuration of a ranging apparatus.
[Fig. 2] Fig. 2 is a diagram for providing a brief overview of how the ranging apparatus operates.
[Fig. 3] Fig. 3 is a flow chart showing a sequence of actions of one round of ranging operation that is carried out by the ranging apparatus.
[Fig. 4] Fig. 4 is a diagram schematically showing a configuration of a ranging apparatus according to Embodiment 1.
[Fig. 5] Fig. 5 is a flow chart showing an example of one round of ranging operation.
[Fig. 6A] Fig. 6A is a diagram showing an example of a distance image.
[Fig. 6B] Fig. 6B is a diagram showing an example of a second range that is selected.
[Fig. 6C] Fig. 6C is a diagram showing examples of ranges of illumination with scan beams.
[Fig. 7] Fig. 7 is a flow chart showing another example of one round of ranging operation.
[Fig. 8] Fig. 8 is a diagram for explaining an example of a ranging method based on direct TOF.
[Fig. 9] Fig. 9 is a diagram for explaining an example of a ranging method based on indirect TOF.
[Fig. 10A] Fig. 10A is a diagram showing examples of optical pulses and exposure time windows in a close-range mode.
[Fig. 10B] Fig. 10B is a diagram showing examples of optical pulses and exposure time windows in a long-range mode.
[Fig. 11] Fig. 11 is a diagram showing another example of range switching.
[Fig. 12A] Fig. 12A is a diagram showing examples of timings of emission of flush light and a scan beam and timings of exposure to the flush light and the scan beam.
[Fig. 12B] Fig. 12B is a diagram showing an example in which ranging based on the flash light and ranging based on the scan beam are performed in separate frame operations.
[Fig. 13] Fig. 13 is a diagram schematically showing an example of a scan light source.
[Fig. 14A] Fig. 14A is a diagram schematically showing an example of a scan light source.
[Fig. 14B] Fig. 14B is a diagram schematically showing an example of a structure of an optical waveguide element.
[Fig. 14C] Fig. 14C is a diagram schematically showing an example of a phase shifter.
[Fig. 15] Fig. 15 is a flow chart showing how a ranging apparatus according to a modification of Embodiment 1 operates.
[Fig. 16A] Fig. 16A is a diagram showing an example of a distance image.
[Fig. 16B] Fig. 16B is a diagram showing an example of a second range that is selected.
[Fig. 16C] Fig. 16C is a diagram showing an example of a range of illumination with the scan beam.
[Fig. 17] Fig. 17 is a flow chart showing an operation according to the modification of Embodiment 1.
[Fig. 18] Fig. 18 is a diagram showing examples of timings of emission of the flash light and the scan beam and timings of exposure to the flash light and the scan beam in the modification.
[Fig. 19] Fig. 19 is a flow chart showing how a ranging apparatus according to another modification operates.
[Fig. 20] Fig. 20 is a diagram showing timings of emission and reception in the modification.
[Fig. 21] Fig. 21 is a diagram showing timings of emission and reception in the modification.
[Fig. 22] Fig. 22 is a diagram showing an example of application of a direct TOF method to a configuration in which the scan light is emitted earlier than the flash light.
[Fig. 23] Fig. 23 is a diagram showing a configuration of a ranging apparatus according to Embodiment 2.
[Fig. 24] Fig. 24 is a flow chart showing a sequence of actions of one round of ranging operation that is carried out by the ranging apparatus according to Embodiment 2.
[Fig. 25A] Fig. 25A is a diagram showing an example of a luminance image.
[Fig. 25B] Fig. 25B is a diagram showing examples of areas in the luminance image in which particular physical objects are present.
[Fig. 25C] Fig. 25C is a diagram showing examples of ranges of illumination with scan beams.
[Fig. 25D] Fig. 25D is a diagram showing other examples of ranges of illumination with scan beams.
[Fig. 26] Fig. 26 is a flow chart showing an operation according to a modification of Embodiment 2.

### Description of Embodiments

In the present disclosure, all or some of the circuits, units, apparatuses, members, or sections or all or some of the functional blocks in the block diagrams may be implemented as one or more of electronic circuits including, but not limited to, a semiconductor device, a semiconductor integrated circuit (IC), or an LSI (large scale integration). The LSI or IC can be integrated into one chip, or also can be a combination of multiple chips. For example, functional blocks other than a memory may be integrated into one chip. The name used here is LSI or IC, but it may also be called system LSI, VLSI (very large scale integration), or ULSI (ultra large scale integration) depending on the degree of integration. A Field Programmable Gate Array (FPGA) that can be programmed after manufacturing an LSI or a reconfigurable logic device that allows reconfiguration of the connection or setup of circuit cells inside the LSI can be used for the same purpose.

Further, it is also possible that all or some of the functions or operations of the circuits, units, apparatuses, members, or sections are implemented by executing software. In such a case, the software is stored on one or more non-transitory storage media such as a ROM, an optical disk, or a hard disk drive, and when the software is executed by a processor, the software causes the processor together with peripheral devices to execute the functions specified in the software. A system or device may include such one or more non-transitory storage media on which the software is stored and a processor together with necessary hardware devices such as an interface.

The following describes an exemplary embodiment of the present disclosure. It should be noted that the embodiment to be described below illustrates a general or specific examples. The numerical values, shapes, constituent elements, placement and topology of constituent elements, steps, orders of steps, or other features that are shown in the following embodiment are merely examples and are not intended to limit the present disclosure. Further, those of the constituent elements in the following embodiment which are not recited in an independent claim representing the most generic concept are described as optional constituent elements. Further, the drawings are schematic views and are not necessarily strict illustrations. Furthermore, in the drawings, substantially the same components are given the same reference signs, and a repeated description may be omitted or simplified.

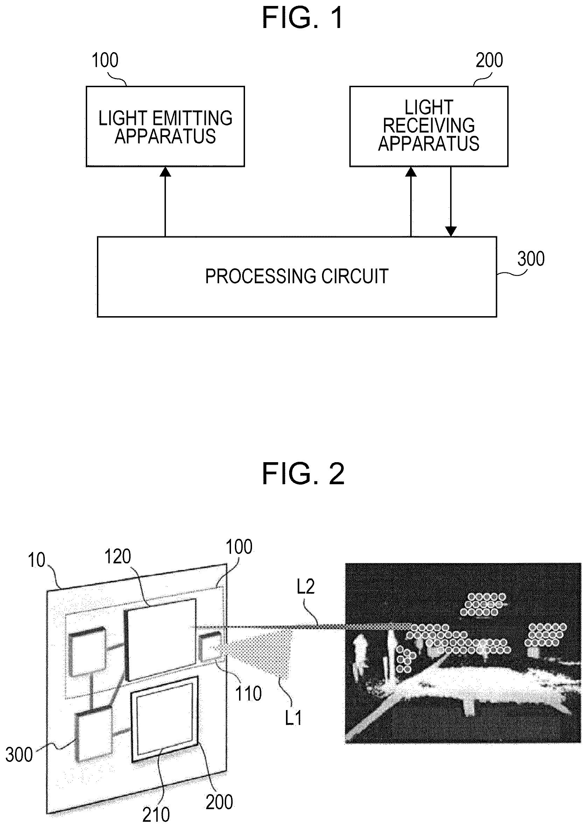

Fig. 1 is a block diagram schematically showing a configuration of a ranging apparatus according to an exemplary embodiment of the present disclosure. The ranging apparatus according to the present embodiment includes a light emitting apparatus 100, a light receiving apparatus 200, and a processing circuit 300. The ranging apparatus may be utilized as part of a lidar system that is mounted, for example, in a vehicle. The ranging apparatus is configured to illuminate a ranging target scene with light, generate distance data, and output the distance data. The term "distance data" as used in the present disclosure means any form of data representing an absolute distance from a point of reference to one or more points of measurement in a scene or a relative depth between points of measurement or any form of data on the basis of which the distance or depth is calculated. The distance data may for example be distance image data or three-dimensional point group data. Further, the distance data is not limited to data directly representing the distance or depth, but may be sensor data on the basis of which the distance or depth is calculated, i.e. raw data. The sensor data, i.e. the raw data, is data that is outputted from a sensor that the light receiving apparatus 200 includes. The raw data may for example be luminance data representing one or more luminances detected by the light receiving apparatus 200.

The light emitting apparatus 100 emits multiple types of light having different extents of divergence. For example, the light emitting apparatus 100 can project, toward a scene, an optical beam or flash light having a relatively large extent of divergence or project, toward a particular region in the scene, an optical beam having a small extent of divergence. In other words, the light emitting apparatus 100 can emit first light that is relatively broad and second light that illuminates a range that is narrower than a range of illumination with the first light. The light emitting apparatus 100 may include a first light source that emits the first light and a second light source that emits the second light. Alternatively, the light emitting apparatus 100 may include one light source that is capable of emitting both the first light and the second light.

The light receiving apparatus 200 detects a reflection of light emitted by the light emitting apparatus 100. The light receiving apparatus 200 includes, for example, one or more image sensors. The light receiving apparatus 200 detects first reflected light produced by illumination with the first light and outputs first detection data. The light receiving apparatus 200 also detects second reflected light produced by illumination with the second light and outputs second detection data. The light receiving apparatus 200 may include a first image sensor that detects the first reflected light and outputs the first detection data and a second image sensor that detects the second reflected light and outputs the second detection data. Alternatively, the light receiving apparatus 200 may include one image sensor that is capable of separately detecting the first reflected light and the second reflected light.

The control circuit 300 is a circuit that controls the light emitting apparatus 100 and the light receiving apparatus 200 and that processes data outputted from the light receiving apparatus 200. The processing circuit 300 includes one or more processors and one or more storage media. The storage media include memories such as RAMs and ROMs. In the storage media, a computer program that is executed by a processor and a variety of data generated in the process of processing may be stored. The processing circuit 300 may be an aggregate of a plurality of circuits. For example, the processing circuit 300 may include a control circuit that controls the light emitting apparatus 100 and the light receiving apparatus 200 and a signal processing circuit that processes a signal outputted from the light receiving apparatus 200.

Fig. 2 is a diagram for providing a brief overview of how the ranging apparatus operates. Fig. 2 schematically shows an example of the ranging apparatus and an example of a distance image that may be generated by the ranging apparatus. In this example, the light emitting apparatus 100 includes a first light source 110 and a second light source 120. The first light source 110 is configured to emit flash light L1 as the first light. The second light source 120 is configured to emit, as the second light, an optical beam L2 that diverges less. The second light source 120 can change the direction of emission of the optical beam L2. The light receiving apparatus 200 includes an image sensor 210. In this example, the image sensor 210 is a TOF image sensor that is capable of TOF (time-of-flight) ranging. The image sensor 210 can utilize a direct TOF or indirect TOF technique to generate a distance image of a ranging target scene. The processing circuit 300 controls the first light source 110, the second light source 120, and the image sensor 210.

The processing circuit 300 according to the present embodiment causes the first light source 110 to emit the flash light L1 and causes the image sensor 210 to detect a reflection of the flash light L1. This causes the image sensor 210 to generate and output distance image data on the target scene as the first detection data. The processing circuit 300 determines, on the basis of the distance image data thus outputted, one or more regions in the scene that require higher-accuracy ranging. Then, the processing circuit 300 causes the second light source 120 to emit the optical beam L2 toward the regions thus determined and causes the image sensor 210 to detect reflections of the optical beam L2. At this point in time, the processing circuit 300 may sequentially change the direction of emission of the optical beam L2 so that the regions thus determined may be scanned with the optical beam L2. The plurality of white circles shown in the right section of Fig. 2 indicate examples of regions that are illuminated with the optical beam L2. Scanning these regions with the optical beam L2 allows the image sensor 210 to generate distance data on these regions. On the basis of the distance data outputted from the image sensor 210, the processing circuit 300 can output distance data to a physical object that is present in a particular region in the scene. Repetition of the foregoing operation causes distance data on the target scene, e.g. distance image data, to be outputted at a predetermined frame rate.

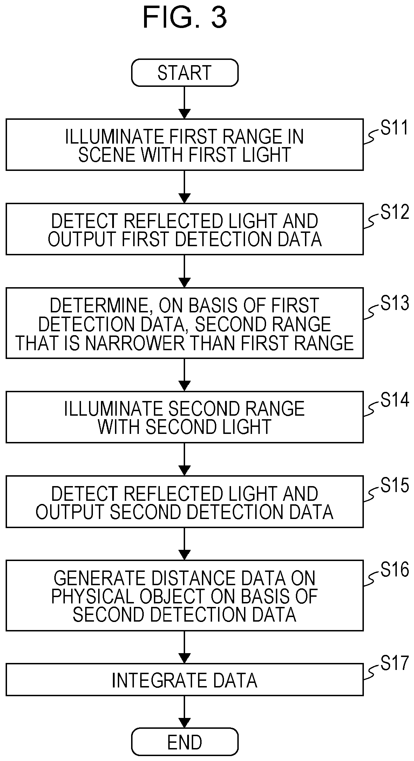

Fig. 3 is a flow chart showing a sequence of actions of one round of ranging operation that is carried out by the ranging apparatus. The processing circuit 300 executes the actions of steps S11 to S17 shown in the flow chart of Fig. 3. The following describes the action of each step.

### (Step S11)

The processing circuit 300 causes the light emitting apparatus 100 to emit first light that illuminates a first range in a scene. Since, in the example shown in Fig. 2, the first light is flash light, a comparatively wide range in the scene is illuminated with the flash light.

### (Step S12)

The processing circuit 300 causes the light receiving apparatus 200 to detect first reflected light produced by illumination with the first light and output first detection data. In the example shown in Fig. 2, the first detection data is distance image data representing a distance distribution within the first range. The first detection data may be luminance image data representing a luminance distribution within the first range.

### (Step S13)

The processing circuit 300 determines, on the basis of the first detection data, one or more second ranges that are narrower than the first range. As these second ranges, for example, ranges in an image represented by the first detection data that are low in accuracy of distance measurement or in which physical objects of interest are estimated to be present may be selected. In a case where the first detection data is distance image data and in a case where the amount of light received by pixels referred to in generating the distance image data is small, it is conceivable that the reliability of a distance calculated for those pixels may be low. Accordingly, for example, in a case where a pixel value indicating the amount of light received by pixels falls short of a predetermined threshold, ranges including those pixels may be determined as the second ranges. Meanwhile, in a case where the first detection data is luminance image data, the second ranges may be determined by utilizing a publicly-known image recognition technique to recognize a particular physical object (such as an automobile, a motorcycle, a bicycle, or a pedestrian).

### (Step S14)

The processing circuit 300 causes the light emitting apparatus 100 to emit second light that illuminates the second ranges. As shown in Fig. 2, the second light is an optical beam that is narrower than the first light. For this reason, the second light is higher in energy density and reaches a more distant place than the first light. That is, illumination with the second light makes it possible to measure the distance to a more distant place than in a case where the first light is used. Accordingly, as for a region the distance to which cannot be measured with sufficient accuracy solely by illumination with the first light too, the distance can be measured with higher accuracy by illumination with the second light. In a case where the beam diameter of the second light is smaller than the second ranges, the processing circuit 300 controls the light emitting apparatus 100 so that the second ranges are scanned with the second light.

### (Step S15)

The processing circuit 300 causes the light receiving apparatus 200 to detect second reflected light produced by illumination with the second light and output second detection data. The second detection data may be distance data or luminance data on a region illuminated with the second light.

### (Step S16)

On the basis of the second detection data, the processing circuit 300 generates and outputs distance data representing the distance to one or more physical objects that are present in the second ranges. This makes it possible to acquire distance information that cannot be obtained solely by illumination with the first light, e.g. distance information on a distant physical object.

### (Step S17)

The processing circuit 300 may integrate the first detection data and the second detection data into one piece of data. For example, distance image data based on the first detection data and distance image data based on the second detection data may be integrated to reconstruct one piece of distance image data. Alternatively, three-dimensional point group data based on the first detection data and three-dimensional point group data may be integrated to reconstruct one piece of three-dimensional point group data. Alternatively, luminance data based on the first detection data and luminance data based on the second detection data may be integrated to reconstruct one piece of luminance data. It should be noted that this integration process is not essential, and pieces of distance data may be individually outputted in sequence.

The flow chart shown in Fig. 3 shows one round of ranging operation, and in an actual application, the operation shown in Fig. 3 may be repeatedly executed. For example, the operation shown in Fig. 3 may be repeatedly executed at a rate of thirty rounds in a second. Although, in the example shown in Fig. 3, the first light and the second light are emitted at different timings, these beams of light may be simultaneously emitted. In that case, an operation in which the first light and the second light are simultaneously emitted is repeated. A second region that is illuminated with second light is determined on the basis of first detection data obtained by illumination with first light preceding illumination with the second light.

In steps S1 and S12, first detection data may be generated on the basis of a result of integrating reflected light produced by multiple rounds of illumination with the first light, if the intensity of reflected light produced by one round of illumination with the first light is not sufficient. Similarly, in steps S14 and S15, second detection data may be generated on the basis of a result of integrating reflected light produced by multiple rounds of illumination with the second light. The first light and the second light may be integrated the same number of times or different numbers of times.

As noted above, according to the present embodiment, a first region in a scene is illuminated with first light that is relatively broad first. First reflected light produced by illumination with the first light is detected by the light receiving apparatus 200, and first detection data is outputted. Then, on the basis of the first detection data, a second range that is narrower than a first range is determined. The second range thus determined is illuminated with second light that is smaller in extent of divergence than the first light. Second reflected light produced by illumination with the second light is detected by the light receiving apparatus 200, and second detection data is outputted. On the basis of the second detection data, the distance to a physical object that is present in the second range is measured.

Such an operation makes it also possible to more highly accurately measure the distance to a region the distance to which cannot be measured with sufficient accuracy in a case where only the first light is used. Furthermore, necessary distance data can be more quickly acquired than in a configuration in which distance data on the whole scene is acquired by scanning the whole scene with the second light. This makes it possible to quickly acquire highly-reliable distance data. Such a ranging apparatus may be used, for example, as one of sensors in an automated driving system. Using the ranging apparatus according to the present embodiment makes it possible to make, with high accuracy and at high speed, a movable object (such as a person, an automobile, or a motorcycle) recognition needed for automated driving.

The following describes more specific embodiments of the present disclosure.

### (Embodiment 1)

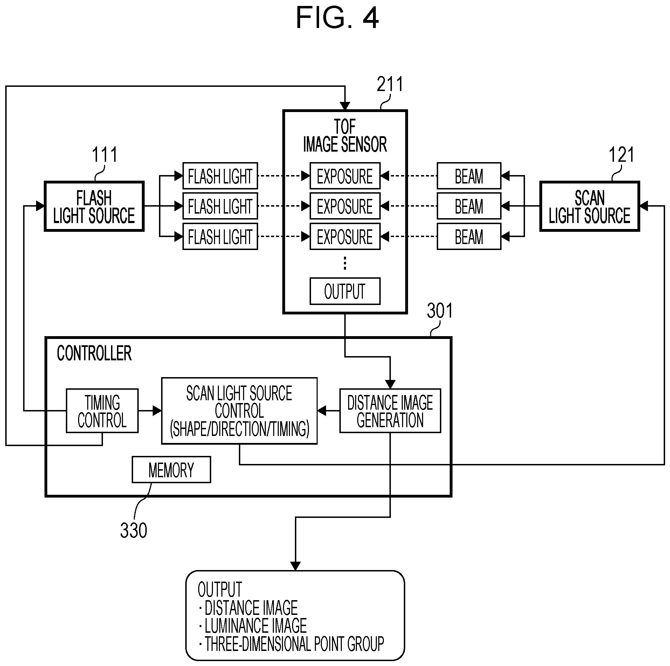

Fig. 4 is a diagram schematically showing a configuration of a ranging apparatus according to an exemplary Embodiment 1 of the present disclosure. The ranging apparatus according to the present embodiment includes a flash light source 111, a scan light source 121, a TOF image sensor 211, and a controller 301. The flash light source 111 corresponds to the aforementioned "first light source". The flash light source 111 emits flash light. The scan light source 121 corresponds to the aforementioned "second light source". The scan light source 121 emits scan light (hereinafter also referred to as "scan beam") serving as an optical beam that illuminates a subset of ranges included in a range of illumination with the flash light. An aggregate of the flash light source 111 and the scan light source 121 corresponds to the aforementioned "light emitting apparatus". The TOF image sensor 211 corresponds to the "image sensor" of the aforementioned "light receiving apparatus". The TOF image sensor 121 utilizes, for example, a direct TOF or indirect TOF technique to generate distance image data on a target scene. The distance image data is hereinafter sometimes referred to simply as "distance image". The controller 301 corresponds to the aforementioned "processing circuit". The controller 301 are connected to the flash light source 111, the scan light source 121, and the image sensor 211 and controls how they operate. The controller 301 includes a processor and a memory 330.

The controller 301 according to the present embodiment exercises control of the timing of emission of the flash light, exercises control of the beam shape, direction of emission, and timing of emission of the scan beam, and executes processing based on data outputted from the image sensor 211. The controller 301 generates and outputs new distance image data on the target scene on the basis of distance image data generated by illumination with the flash light and distance data generated by illumination with the scan light. The controller 301 may generate luminance image data or three-dimensional point group data instead of or in addition to the distance image data. The following describes the details of an operation that is carried out by the controller 301.

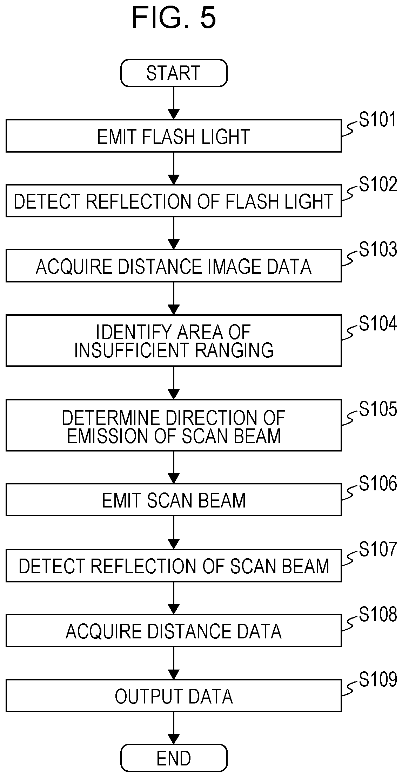

Fig. 5 is a flow chart showing one round of ranging operation that is executed by the controller 301. The controller 301 generates ranging data on a scene by executing the actions of steps S101 to S109 shown in Fig. 5. The following describes the action of each step.

### (Step S101)

The controller 301 drives the flash light source 111 to emit flash light. The flash light illuminates a comparatively wide first range in a scene. Ranging data is obtained by emitting the flash light in the form of pulses and measuring or calculating time delays in reflections of the pulses. Although, in the present embodiment, the flash light is used, a comparatively wide-angle optical beam may be used instead of the flash light.

### (Step S102)

The controller 301 causes the image sensor 211 to perform an exposure and detect a reflection of the flash light. Detection of reflected light occurs for each pixel of the image sensor 211. In the present embodiment, a direct TOF or indirect TOF technique is utilized to calculate a distance for each pixel. Signals representing each pixel may be accumulated by repeating illumination with the flash light and exposure by the image sensor more than once. Such an operation makes it possible to bring about improvement in SN (signal-to-noise) ratio. The image sensor 211 outputs data representing the value of a distance for each pixel. This data is called "distance image data". A specific example of operation of the image sensor 211 will be described later.

### (Step S103)

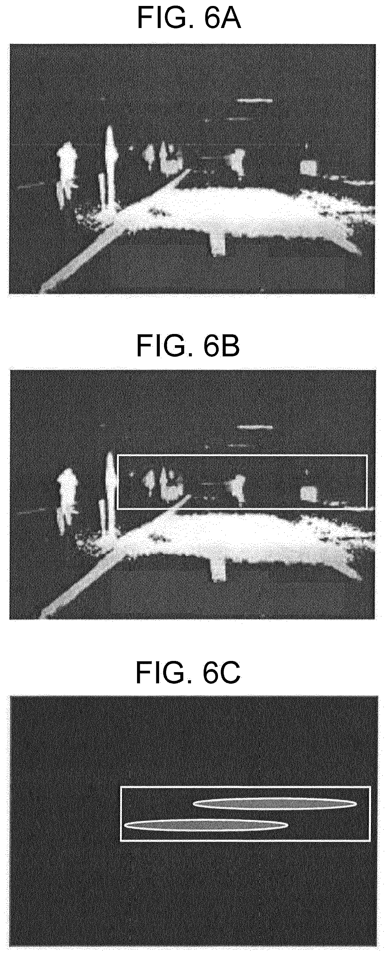

The controller 301 acquires distance image data outputted from the image sensor 211. Fig. 6A is a diagram showing an example of a distance image. As shown in this example, an image representing a distance distribution within a first region is generated and stored in the memory 330.

### (Step S104)

On the basis of the distance image data, the controller 301 identifies, as a second range, an area estimated to be low in reliability of ranging. For example, the controller 301 determines a second range on the basis of light intensity data on each pixel used when the image sensor 211 calculated a distance for each pixel or the value of a distance for each pixel of the distance image generated. As a region estimated to be low in reliability of ranging, for example, a region in which the value of light intensity data on the basis of which the distance image was generated is smaller than a threshold, .i.e. in which the SN ratio is low, may be selected. Fig. 6B is a diagram showing an example of a second range that is selected. In Fig. 6B, an example of a second range is expressed by a rectangular frame. In this way, a subset of areas of the distance image is determined as a second range. Although, in the example shown in Fig. 6B, one rectangular area is determined as a second range, a plurality of areas may be determined as second ranges.

### (Step S105)

The controller 301 determines the direction of emission of a scan beam. The direction of emission is set to such a direction that at least part of the second range is illuminated with the scan beam. Note here that the scan light source 121 may be configured such that the beam shape or the beam diameter as well as the direction of the beam can be changed. In that case, the controller 301 may adjust the beam shape and/or the beam diameter as well as the direction of the scan beam according to the distribution of second ranges.

### (Step S106)

The controller 301 instructs the scan light source 121 to emit the scan beam in the direction of emission thus determined. This causes at least part of the second range to be illuminated with the scan beam. In a case where one round of emission of the scan beam is insufficient in light quantity, signals may be accumulated by repeating an exposure by emitting the scan beam more than once in the same direction. Fig. 6C is a diagram showing examples of ranges of illumination with scan beams. In Fig. 6C, examples of ranges of illumination with scan beams are expressed by ellipses. In Fig. 6C, two ranges of illumination with two scan beams of different directions are illustrated. The controller 301 may cause the entire second range to be illuminated by repeatedly emitting the scan beam in varying directions. Alternatively, a plurality of scan beams may be simultaneously emitted in different directions.

### (Step S107)

The controller 301 causes the image sensor 211 to detect a reflection of the scan beam and output distance data on the range of illumination with the scan beam. In a case where the scan beam is emitted more than once, an exposure is performed each time the scan beam is emitted. In that case, the actions of steps S105 to S107 are repeated until a scan is completed.

### (Step S108)

The controller 301 acquires distance data on the second range as generated by the image sensor 211. This distance data is data representing the value of distances for a plurality of pixels corresponding to the second range illuminated with the scan beam.

### (Step S109)

The controller 301 generates and outputs new distance image data on the basis of the distance image data acquired in step S103 and the distance data acquired in step S108. This distance image data may be data obtained by replacing data, contained in the distance image data acquired in step S103, that corresponds to the second range with the data acquired in step S108. The controller 301 may output, in addition to the distance image data, luminance image data acquired from the image sensor 211 or another image sensor (not illustrated). Although, in this example, the controller 301 integrates and outputs the data based on the flash light and the data based on the scan light, the controller 301 may output the two pieces of data as separate pieces of data.

The controller 301 may convert the value of each distance in the distance image data into a three-dimensional coordinate value and output it as three-dimensional point group data. Further, the controller 301 may output a combination of luminance image data detected by the image sensor 211 in steps S102 and S107 and additional data needed to calculate distance image data from the luminance image data. The additional data is data, needed for the after-mentioned distance calculation based on indirect TOF, that represents the timing of exposure and the width of an exposure time window of the image sensor 211.

The foregoing operation makes it also possible to acquire ranging data for a region that cannot be subjected to accurate ranging solely by the flash light. This makes it possible to increase the amount of ranging information that can be acquired. Furthermore, necessary distance data can be more quickly acquired than in a configuration in which the whole scene is scanned with the scan beam.

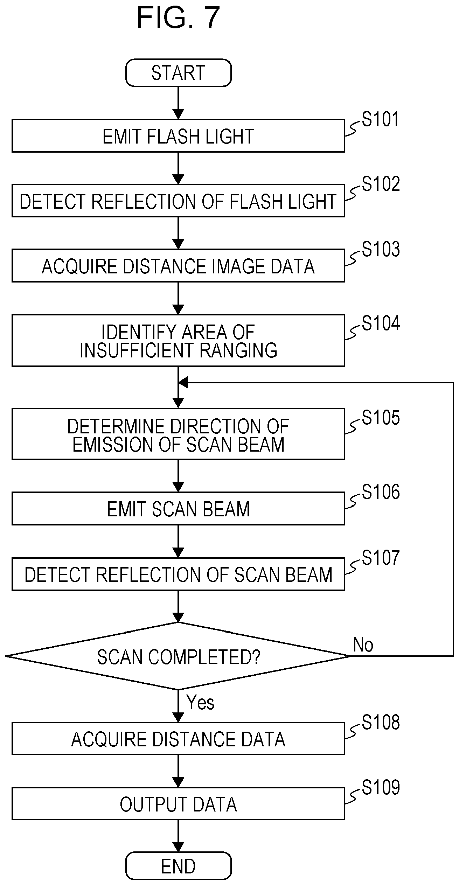

Fig. 7 is a flow chart showing an example of an operation in which the second range is scanned by the scan beam. The operation shown in Fig. 7 is the same as the operation shown in Fig. 5, except that a step of judging whether a scan has been completed is added between step S107 and step S108. In this example, after step S107, whether a scan has been completed is judged. Until it is judged that a scan has been completed, the actions of steps S105 to S107 are repeated. In this example, in step S105, the direction of emission of the scan beam is determined so that a region in the second range determined in step S104 that has yet to be illuminated a predetermined number of times or more is illuminated. The predetermined number of times here refers to the number of times required for signal accumulation of the pixels of the image sensor 211, and may be set to any number of times larger than or equal to 1. In an example, this number of times is larger than or equal to 100 and, in some cases, may be larger than or equal to 1000. Repeating the actions of steps S105 to S107 causes the whole second range to be scanned by the scan beam. Once the whole second range is scanned by the scan beam, it is judged that a scan has been completed, and the operation proceeds to step S108.

Next, a ranging operation that is carried out by the ranging apparatus according to the present embodiment is more specifically described. In the present embodiment, a technique such as direct TOF or indirect TOF is utilized to measure a distance.

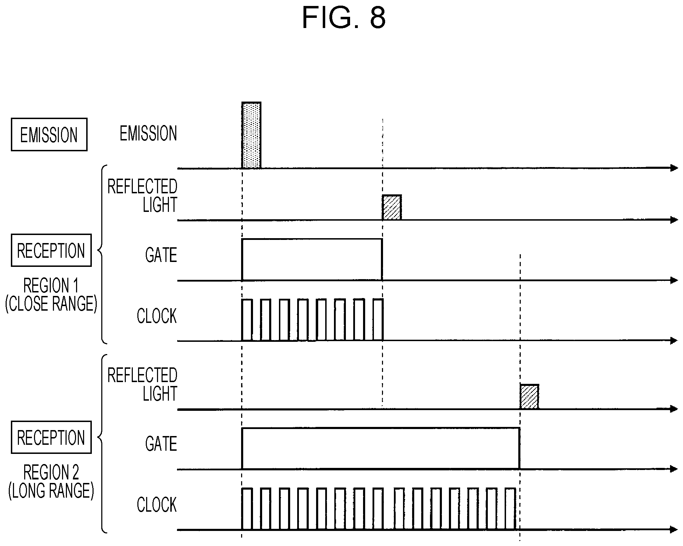

Fig. 8 is a diagram for explaining an example of a ranging method based on direct TOF. Direct TOF is a method by which a time from emission to return of an optical pulse is measured by a clock of each light receiving element of the image sensor 211. The time of flight of light can be measured by generating a gate signal until the timing of return of reflected light and counting the number of clock pulses in the gate signal. Fig. 8 illustrates gate signals and clock pulse signals in a case where reflected light returns from a relatively near region and a case where reflected light returns from a relatively far region. In the case of reflected light from a distant place, the number of clock counts is larger, as such reflected light arrives at the image sensor 211 late. Distance D [m] can be calculated by a computation of D = T/2c, where T [s] is the time of flight and c is the speed of light (≈ 3 × 10⁸ m/s).

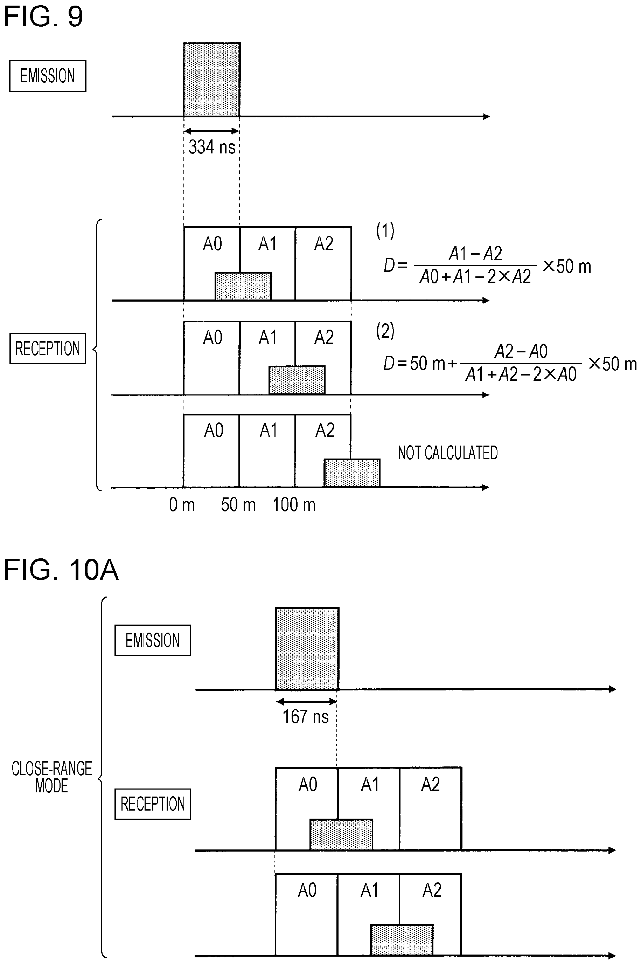

Fig. 9 is a diagram for explaining an example of a ranging method based on indirect TOF. Indirect TOF is a method by which a time from emission to return of an optical pulse is measured by being converted into a light intensity. In the example shown in Fig. 9, each pixel is provided with three exposure time windows, and a distance is calculated from light intensities detected in the respective time windows. The time windows are set in accordance with ranges of measurement needed. For example, in a case where ranging is performed on a range of 0 m to 100 m, ranging is made possible by, as shown in Fig. 9, preparing three exposure windows of 334 nanoseconds (ns) and setting the time duration of an optical pulse to 334 ns. Fig. 9 illustrates a pulse of reflected light from an object at a distance shorter than 50 m, a pulse of reflected light from an object located within a range of 50 m to 100 m, and a pulse of reflected light from an object at a distance longer than 100 m. Let it be assumed that A0 is a signal value in a first time window, A1 is a signal value in a second time window, and A2 is a signal value in a second time window. In a case where reflected light is detected in the first and second time windows and no reflected light is detected in the third time window, the distance D is shorter than or equal to 50 m, and is calculated by Formula (1) shown in Fig. 9. Further, in a case where reflected light is detected in the second and third time windows and no reflected light is detected in the first time window, the distance D is longer than or equal to 50 m and shorter than or equal to 100, and is calculated by Formula (2) shown in Fig. 9. Meanwhile, in a case where no reflected light is detected in either of the first and second time windows, the distance is not calculated. The time duration of an emitted optical pulse and the duration of each exposure time window are set according to the range of measurement of the distance. For example, in a case where ranging is performed in a range up to 50 m, the duration is set to approximately 167 ns. This ranging method makes ranging possible with one pattern of operation without changing the mode of operation of each light receiving element of the image sensor 211.

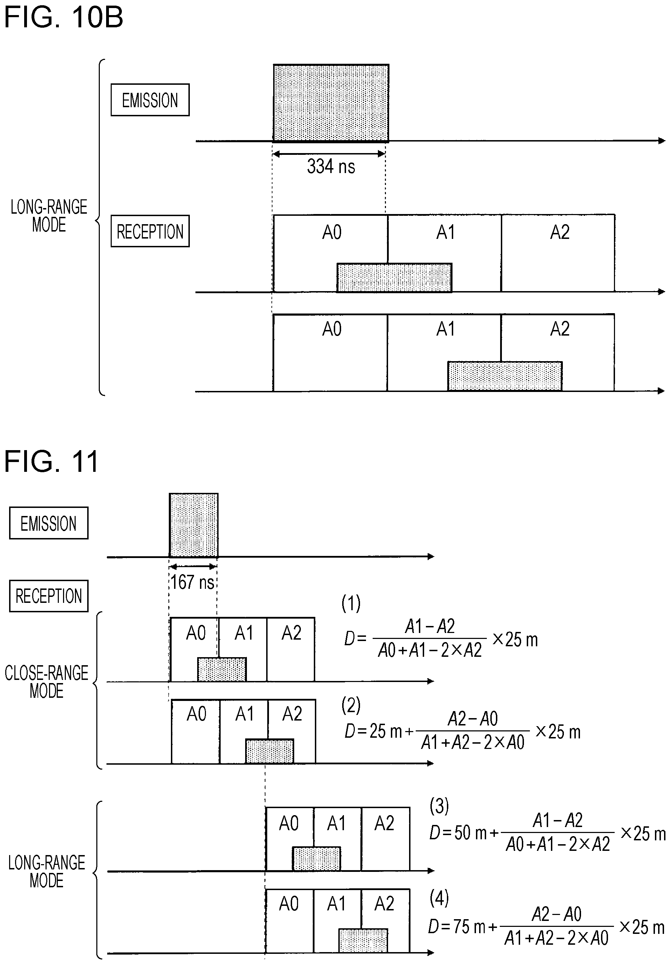

The controller 301 is configured to switch between a mode in which close-range ranging is possible and a mode in which long-range ranging is possible. Specifically, the controller 301 operates in a close-range mode during emission of the flash light and operates in a long-range mode during emission of the scan beam. Figs. 10A and 10B are diagrams for explaining an example of such a switching operation. Fig. 10A is a diagram showing examples of optical pulses and exposure time windows in the close-range mode. Fig. 10B is a diagram showing examples of optical pulses and exposure time windows in the long-range mode. In the example shown in Fig. 10A, the optical pulse duration and the exposure time windows are set to 167 ns so that ranging can be performed in a range of 0 m to 50 m. In the example shown in Fig. 10B, the optical pulse duration and the exposure time windows are set to 334 ns so that ranging can be performed in a range of 0 m to 100 m. During operation, the controller 301 can switch between the ranges of measurable distances by changing the time duration of the optical pulse and the lengths of the exposure time windows.

Fig. 11 is a diagram showing another example of range switching. In this example, the controller 301 switches between the ranges of measurement by causing the timings of exposure with respect to the timing of emission to vary. For example, in the close-range mode, an exposure is performed at the same timing as in the example shown in Fig. 10A, and in the long-range mode, an exposure is started at a timing at which a period of time twice as long as the pulse duration has elapsed since the start timing of emission. In the example shown in Fig. 11, the time duration of the optical pulse and the duration of each exposure time window are set to 167 ns, and switching is done between the close-range mode in which ranging is possible in a range of 0 m to 50 m and the long-range mode in which ranging is possible in a range of 50 m to 100 m.

In the example shown in Fig. 11, in a case where in the close-range mode, reflected light is detected in the first and second time windows and no reflected light is detected in the third time window, the distance D is calculated on the basis of Formula (1) shown in Fig. 11. In a case where in the close-range mode, reflected light is detected in the second and third time windows and no reflected light is detected in the first time window, the distance D is calculated on the basis of Formula (2) shown in Fig. 11. In a case where in the close-range mode, no reflected light is detected in either of the first and second time windows, the distance is not calculated. Meanwhile, in a case where in the long-range mode, reflected light is detected in the first and second time windows and no reflected light is detected in the third time window, the distance D is calculated on the basis of Formula (3) shown in Fig. 11. In a case where in the long-range mode, reflected light is detected in the second and third time windows and no reflected light is detected in the first time window, the distance D is calculated on the basis of Formula (4) shown in Fig. 11. In a case where in the long-range mode, no reflected light is detected in either of the first and second time windows, the distance is not calculated.

The controller 301 may cause the output of the emitted light to vary between the close-range mode and the long-range mode. Such control makes it possible, for example, to make such adjustments as not to cause saturation of exposures.

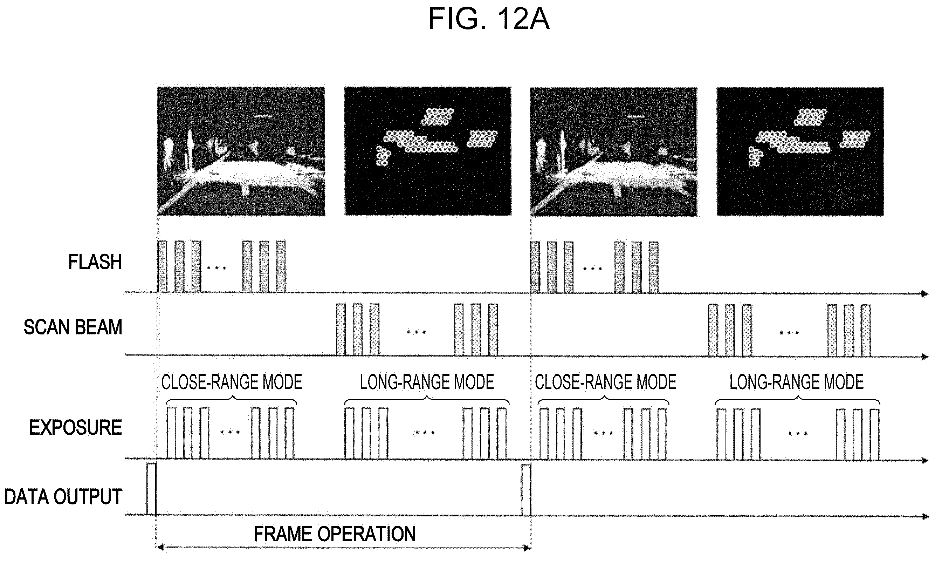

Fig. 12A is a diagram showing examples of timings of emission of the flush light and the scan beam and timings of exposure to the flush light and the scan. The ranging apparatus performs ranging of a particular region with the scan beam after having performed ranging of a wide range with the flash light. In this example, the flash light and the scan beam are both continuously emitted more than once, and an exposure is performed each time they are emitted. For each of the flash light and the scan beam, one frame of two-dimensional image data is generated by a signal corresponding to the amount of electric charge accumulated by multiple rounds of exposure operation; furthermore, distance data is generated and outputted on the basis of the two-dimensional image data. Alternatively, two-dimensional distance data may be generated and outputted after calculating a distance for each pixel according to the amount of electric charge. The controller 301 causes the image sensor 211 to repeatedly execute such an exposure operation and such a data output operation. An operation regarding detection of light and generation of one frame of data is hereinafter referred to as "frame operation". The frame operation is a repeating unit of exposure operation and data output operation by the light receiving apparatus, i.e. an operation between two consecutive rounds of data output operation such as that shown in Fig. 12A. In this example, in each frame operation, the emission of the flash light and periods of exposure to the flash light are set in the first half, and the emission of the scan beam and periods of exposure to the scan beam are set in the second half. With this, for each frame operation, distance data based on the flash light and distance data based on the scan beam are integrated into one frame and outputted. In the example shown in Fig. 12A, an exposure to the flash light is performed in the close-range mode, and an exposure to the scan beam is performed in the long-range mode. Specifically, the timings of exposure with respect to the timings of emission vary between the flash light and the scan beam. This makes it possible to integrate a wide range of close-range to long-range distance data into one frame.

Without being bound by such an example, a range of measurement during emission of the flash light and a range of measurement during emission of the scan light may be identical. The flash light and the scan beam may be emitted only once per frame operation.

In the present disclosure, an aggregate of data acquired by one round of frame operation is referred to as "frame". One frame of data contains, for example, luminance image data, distance image data, or three-dimensional point group data.

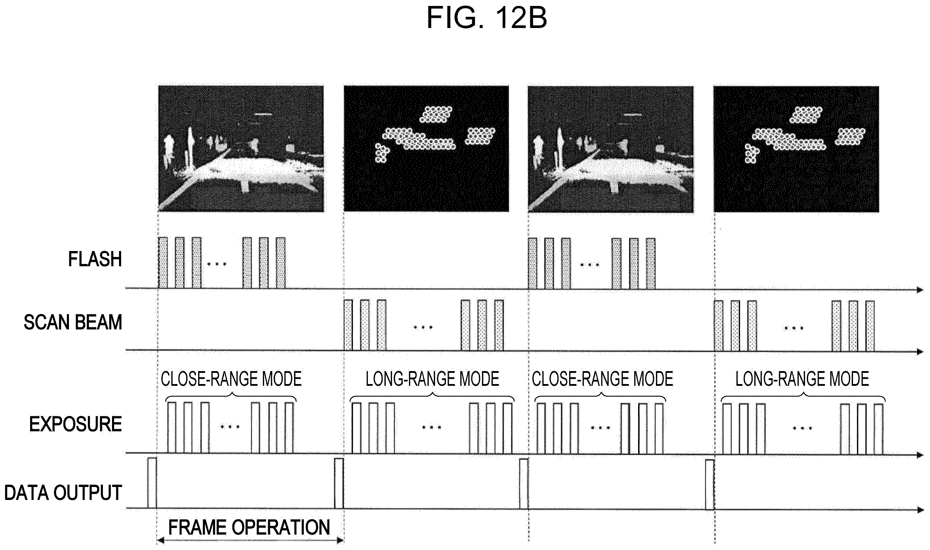

Fig. 12B is a diagram showing an example in which ranging based on the flash light and ranging based on the scan beam are performed in separate frame operations. In the present example, close-range distance data acquired by using the flash light and long-range distance data acquired by using the scan beam are outputted as separate frames of data.

Thus, in the present embodiment, the controller 301 causes the image sensor 211 to repeatedly execute at least one round of exposure operation and a data output operation of outputting two-dimensional data corresponding to the amount of electric charge accumulated by the exposure operation. In one example, emission of the flash light is executed at least once between two consecutive rounds of data output operation, and emission of the scan beam is executed at least once between another two consecutive rounds of data output operation. In another example, both at least one round of emission of the flash light and at least one round of emission of the scan beam are executed between two consecutive rounds of data output operation. In either example, the scan beam, which is emitted between two consecutive rounds of data output operation, may include a plurality of scan beams that are emitted in different directions. The direction of emission of the scan beam is determined on the basis of data obtained by illumination with the flash light emitted earlier.

Next, an example configuration of the scan light source 121 is described. The scan light source 121 is a device that can change the direction of emission of the optical beam under the control of the controller 301. The scan light source 121 can illuminate a subset of regions in a ranging target scene with the optical beam in sequence. The wavelength of the optical beam that is emitted by the scan light source 121 is not limited to a particular wavelength, and may for example be any wavelength included in a visible to infrared range.

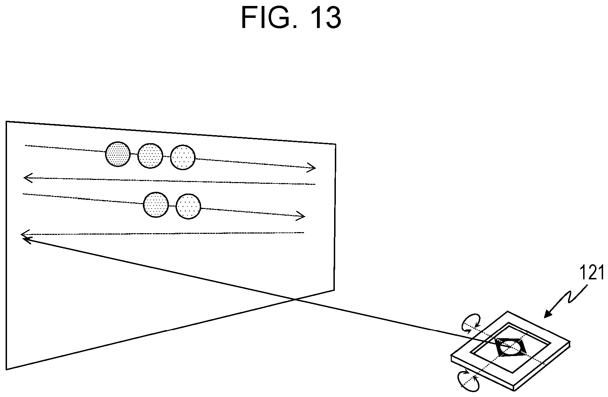

Fig. 13 is a diagram showing an example of the scan light source 121. In this example, the scan light source 121 includes a light-emitting element such as a laser and at least one movable mirror such as a MEMS mirror. Light emitted by the light-emitting element is reflected by the movable mirror and travels toward a predetermined region in a target region (indicated by a rectangle in Fig. 13). The controller 301 drives the movable mirror to change the direction of the light emitted by the scan light source 121. This makes it possible to scan the target region with the light, for example, as indicated by dotted arrows in Fig. 13.

A light source that is capable to changing the direction of emission of light through a structure different from a light source having a movable mirror may be used. For example, as disclosed in PTL 4, a light emitting device including a reflective waveguide may be used. Alternatively, a light emitting device that regulates the phase of light outputted from each antenna by an antenna array and thereby changes the direction of light of the whole array may be used.

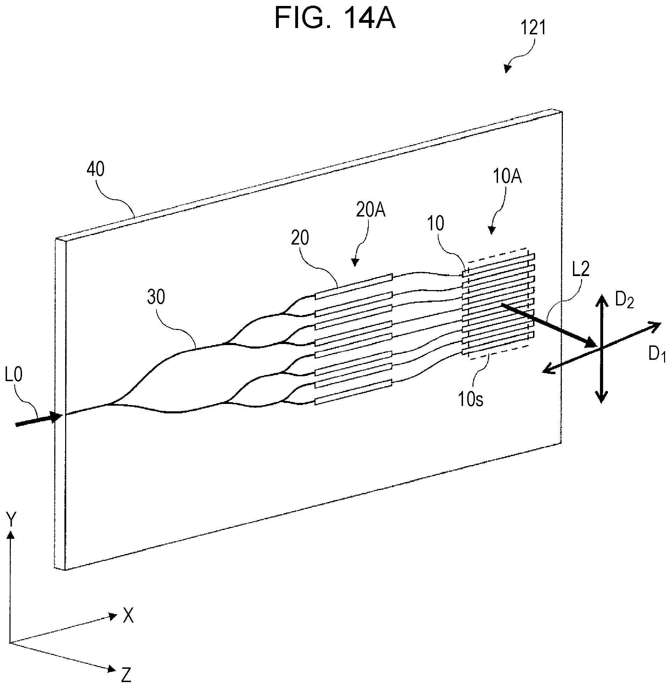

Fig. 14A is a diagram schematically showing an example of the scan light source 112. For reference, X, Y, and Z axes orthogonal to one another are schematically shown. The scan light source 112 includes an optical waveguide array 10A, a phase shifter array 20A, an optical brancher 30, and a substrate 40 on which the optical waveguide array 10A, the phase shifter array 20A, the optical brancher 30 are integrated. The optical waveguide array 10A includes a plurality of optical waveguide elements 10 arrayed in a Y direction. Each of the optical waveguide elements 10 extends in an X direction. The phase shifter array 20 includes a plurality of phase shifters 20 arrayed in the Y direction. Each of the phase shifters 20 includes an optical waveguide extending in the X direction. The plurality of optical waveguide elements 10 of the optical waveguide array 10A are connected separately to each of the plurality of phase shifters 20 of the phase shifter array 20. The optical brancher 30 is connected to the phase shifter array 20A.

Light L0 emitted by a light emitting element (not illustrated) is inputted to the plurality of phase shifters 20 of the phase shifter array 20A via the optical brancher 30. Light having passed through the plurality of phase shifters 20 of the phase shifter array 20A is inputted to each of the plurality of optical waveguide elements 10 of the optical waveguide array 10A with its phase shifted by certain amounts in the Y direction. Light inputted to each of the plurality of optical waveguide elements 10 of the optical waveguide array 10A is emitted as an optical beam L2 from a light exit surface 10s parallel to an X-Y plane in a direction intersecting the light exit surface 10s.

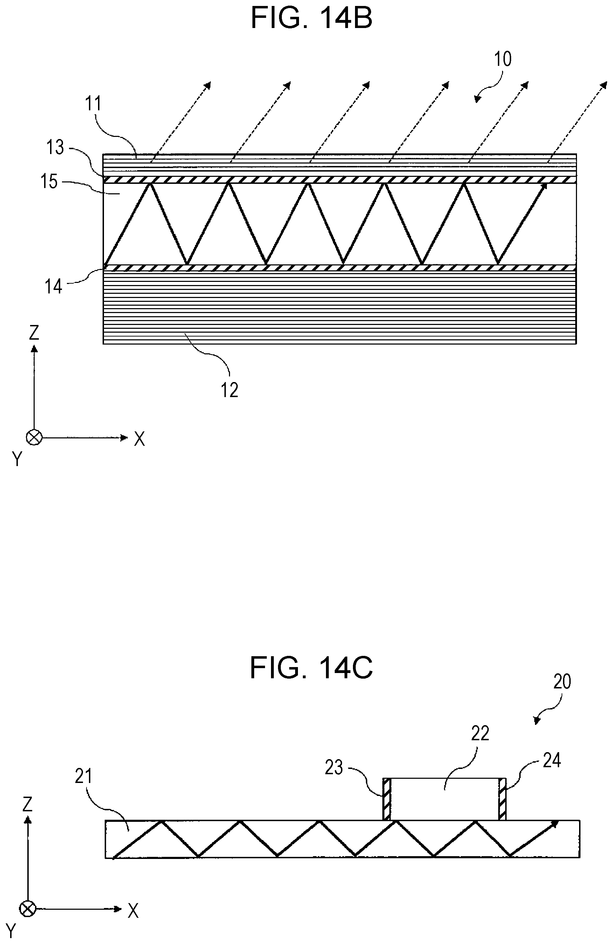

Fig. 14B is a diagram schematically showing an example of a structure of an optical waveguide element 10. The optical waveguide element 10 includes a first mirror 11 and a second mirror 12 that face each other, an optical waveguide layer 15 located between the first mirror 11 and the second mirror 12, and a pair of electrodes 13 and 14 through which a driving voltage is applied to the optical waveguide layer 15. The optical waveguide layer 15 may be constituted by a material, such as a liquid crystal material or an electro-optic material, whose refractive index changes through the application of the voltage. The transmissivity of the first mirror 11 is higher than the transmissivity of the second mirror 12. The first mirror 11 and the second mirror 12 may each be formed, for example, from a multilayer reflecting film in which a plurality of high-refractive-index layers and a plurality of low-refractive-index layers are alternately stacked.

Light inputted to the optical waveguide layer 15 propagates along the X direction through the optical waveguide layer 15 while being reflected by the first mirror 11 and the second mirror 12. The arrow in Fig. 14B schematically represents how the light propagates. A portion of the light propagating through the optical waveguide layer 15 is emitted outward from the first mirror 11.

Applying the driving voltage to the electrodes 13 and 14 causes the refractive index of the optical waveguide layer 15 to change, so that the direction of light that is emitted outward from the optical waveguide element 10 changes. According to changes in the driving voltage, the direction of the optical beam L2, which is emitted from the optical waveguide array 10A, changes. Specifically, the direction of emission of the optical beam L2 shown in Fig. 14A can be changed along a first direction D1 parallel with the X axis.

Fig. 14C is a diagram schematically showing an example of a phase shifter 20. The phase shifter 20 includes a total reflection waveguide 21 containing a thermo-optic material whose refractive index changes by heat, a heater 22 that makes thermal contact with the total reflection waveguide 21, and a pair of electrodes 23 and 24 through which a driving voltage is applied to the heater 22. The refractive index of the total reflection waveguide 21 is higher than the refractive indices of the heater 22, the substrate 40, and air. The difference in refractive index causes light inputted to the total reflection waveguide 21 to propagate along the X direction through the total reflection waveguide 21 while being reflected.

Applying the driving voltage to the part of electrodes 23 and 24 causes the total reflection waveguide 21 to be heated by the heater 22. This results in a change in the refractive index of the total reflection waveguide 21, so that there is a shift in the phase of light that is emitted from an end of the total reflection waveguide 21. Changing the phase difference in light that is outputted from two adjacent phase shifters 20 of the plurality of phase shifters 20 shown in Fig. 14A allows the direction of emission of the optical beam L2 to change along a second direction D2 parallel with the Y axis.

The foregoing configuration allows the scan light source 121 to two-dimensionally change the direction of emission of the optical beam L2.

Details such as the principle of operation and method of operation of such a scan light source 112 are disclosed in PTL 4, the entire contents of which are hereby incorporated by reference.

Next, an example configuration of the image sensor 211 is described. The image sensor 211 includes a plurality of light receiving elements two-dimensionally arrayed along a photosensitive surface. The image sensor 211 may be provide with an optical component (not illustrated) facing the photosensitive surface of the image sensor 211. The optical component may include, for example, at least one lens. The optical component may include another optical element such as a prism or a mirror. The optical component may be designed so that light having diffused from one point on an object in a scene converges at one point on the photosensitive surface of the image sensor 211.

The image sensor 211 may for example be a CCD (charge-coupled device) sensor, a CMOS (complementary metal-oxide semiconductor) sensor, or an infrared array sensor. Each of the light receiving elements includes a photoelectric conversion element such as a photodiode and one or more charge accumulators. Electric charge produced by photoelectric conversion is accumulated in the charge accumulators during an exposure period. The electric charge accumulated in the charge accumulator is outputted after the end of the exposure period. In this way, each of the light receiving elements outputs an electric signal corresponding to the amount of light received during the exposure period. This electric signal may be referred to as "received light data". The image sensor 211 may be a monochrome imaging element, or may be a color imaging element. For example, a color imaging element having an R/G/B, R/G/B/IR, or R/G/B/W filter may be used. The image sensor 211 may have detection sensitivity not only to a visible wavelength range but also to a range of wavelengths such as ultraviolet, near-infrared, mid-infrared, or far-infrared wavelengths. The image sensor 211 may be a sensor including a SPAD (single-photon avalanche diode). The image sensor 211 may include an electronic shutter of a mode by which all pixels are exposed en bloc, i.e. a global shutter mechanism. The electronic shutter may be of a rolling-shutter mode by which an exposure is performed for each row or of an area shutter mode by which only a subset of areas adjusted to a range of illumination with an optical beam are exposed. In a case where the electronic shutter is of a global shutter mode, two-dimensional information can be acquired at once by controlling the shutter in synchronization with flash light. On the other hand, in the case of a mode, such as a rolling shutter, by which the exposure timing is changed for each subset of pixels, the amount of information that can be acquired decreases, as only a subset of pixels adjusted to the exposure timing can receive the flash light and pixels that are out of the exposure timing cannot receive the flash light. Note, however, that this problem can also be addressed by executing signal processing of distance calculation with a correction made to a shift in shutter timing for each pixel. On the other hand, in the case of the scan light, reflected light returns only to a subset of pixels, as the range of illumination with the light is narrow. For this reason, a mode, such a rolling shutter, by which the exposure timing is changed for each subset of pixels according to the direction of emission of the scan light makes it possible to efficiently acquire more distance information than a global shutter mode. Note, however, that in a case where the amount of information to be measured with the scan light is not as large, e.g. in a case where the number of physical objects is as small as 10 or less, a sufficient amount of information can be acquired even by combination with a global shutter mode. With these characteristics taken into account, the image sensor 211 may be switchable between modes of the electronic shutter. For example, in the case of ranging based on the flash light, an exposure is performed by a global shutter mode, and in the case of ranging based on the scan beam, an exposure may be performed in a rolling shutter mode or an area shutter mode adjusted to the spot shape of the scan beam.

Next, modifications of the present embodiment are described.

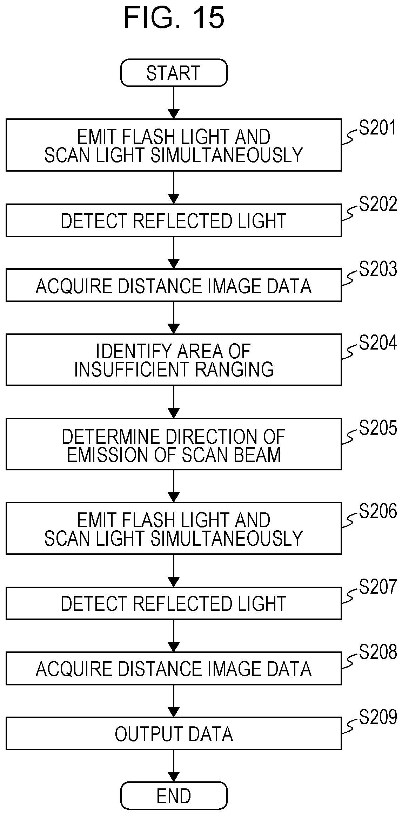

Fig. 15 is a flow chart showing how a ranging apparatus according to a modification of the present embodiment operates. In the present modification, the controller 301 controls the flash light source 111 and the scan light source 121 so that the flash light source 111 and the scan light source 121 simultaneously emit the flash light and the scan light in each frame operation. The controller 301 executes the actions of steps S201 to S209 shown in Fig. 15. The following describes the action of each step.

### (Step S201)

The controller 301 drives the flash light source 111 and the scan light source 121 to simultaneously emit flash light and scan light. The flash light illuminates a comparatively wide first range in a scene. Meanwhile, the scan light illuminates a comparatively narrow second range in the scene. The direction of emission of the scan light in this step is a particular direction set in advance.

### (Step S202)

The controller 301 causes the image sensor 211 to execute an exposure and detect reflections of the flash light and the scan light. Detection of reflected light occurs for each pixel of the image sensor 211. The image sensor 211 outputs two-dimensional image data corresponding to the amount of electric charge accumulated. The actions of steps S201 and S202 are equivalent to a first frame operation. The image sensor 211 generates, on the basis of the two-dimensional image data, distance image data having the value of a distance for each pixel, and outputs the distance image data. Alternatively, the image sensor 211 may calculate a distance for each pixel from the amount of electric charge accumulated, generate two-dimensional distance data on the basis of the distance, and output the two-dimensional distance data.

### (Step S203)

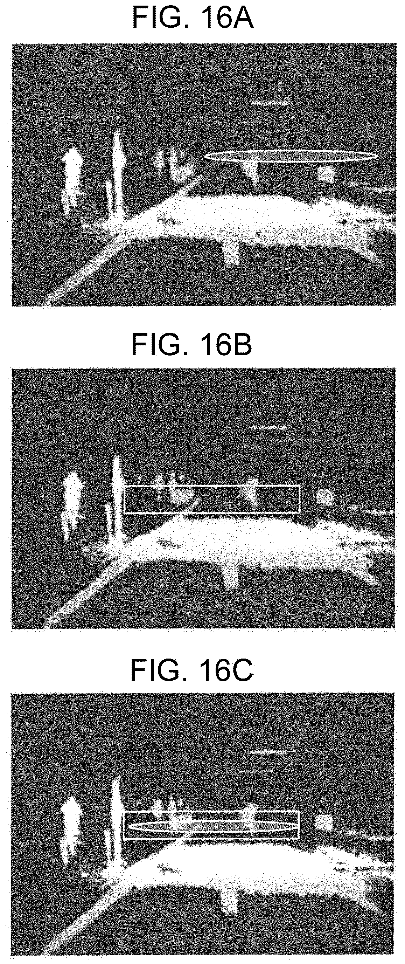

The controller 301 acquires distance image data outputted from the image sensor 211. Fig. 16A is a diagram showing an example of a distance image. In Fig. 16A, an example of a region illuminated with the scan light is indicated by an ellipse. A range of illumination with the scan light is not limited to an ellipse but may have another shape such as a circle. In a case where the scan light source 121 is configured such that the beam shape or the beam diameter can be changed, the controller 301 may change the beam shape or the beam diameter for each time the scan light is emitted. In this example, an image representing a distance distribution within a first region is generated and stored in the memory 330.

### (Step S204)

The controller 301 identifies an area estimated to be insufficient in ranging as a second range on the basis of the distance image data generated in step S203. In this example too, a second range may be determined on the basis of the reflected light intensity of each pixel. For example, in a case where it has been judged that the intensity of a reflection of the scan light is sufficiently high, the controller 301 may determine, as a second range, a region in which the reflected light intensity is lower than a threshold and the SN is low. Further, even when it is judged that the intensity of a reflection of the scan light is insufficient, the controller 301 may change the direction of emission to turn sights on a place where the intensity of reflected light further increases. Such control makes it possible to increase the amount of distance information that is obtained. In a case where the reflected light intensity of the scan light is obtained with an appropriate SN, the second range determined by the previous frame operation may not be changed, and the same region may be illuminated. Fig. 16B shows an example of a second range that is selected. In this example, a range that is different from the range of illumination indicated by an ellipse in Fig. 16A is set as a range of illumination with scan light that is emitted in the next frame operation, i.e. a second range.

### (Step S205)

The controller 301 determines the direction of emission of the scan beam in the next frame operation. The direction of emission thus determined is such a direction that at least part of the second range determined in step S204 is illuminated with the scan beam.

Then, the actions of steps S206 and S207, which are equivalent to a second frame operation following the first frame operation, are executed.

### (Step S206)

The controller 301 drives the flash light source 111 and the scan light source 121 to simultaneously emit the flash light and the scan beam. The direction of emission of the scan beam is the direction determined in step S205. Fig. 16C shows an example of a range of illumination with the scan beam. In Fig. 16C, the range that is illuminated with the scan beam is indicated by an ellipse.

### (Step S207)

The controller 301 causes the image sensor 211 to execute an exposure and detect reflections of the flash light and the scan light. Detection of reflected light occurs for each pixel of the image sensor 211. The image sensor 211 generates distance image data representing the value of a distance for each pixel and stores the distance image data on a storage medium.

### (Step S208)

The controller 301 acquires, from the storage medium, the distance image data outputted in step S207.

### (Step S209)

The controller 301 outputs the distance image data to the storage medium. At this point in time, luminance image data acquired from the image sensor 211 or another image sensor (not illustrated) may be outputted too.

The foregoing operation too makes it possible to acquire higher-accuracy distance data than in a case where only the flash light is used. Further, necessary distance data can be more quickly acquired than in a configuration in which the whole scene is scanned with the scan light alone.

Although, in the modification shown in Fig. 15, the direction of emission of the scan beam in the second frame operation is determined on the basis of the detection data acquired by the immediately preceding first frame operation, the direction of emission of the scan beam in the second frame operation may be determined on the basis of detection data acquired by a frame operation preceding the first frame operation.

Further, in a case where multiple rounds of ranging are consecutively performed, the actions of steps S204 to S209 shown in Fig. 15 may be repeatedly executed, although Fig. 15 shows only two frames of operation. The following describes an example of a case where such a repetitive operation is performed.

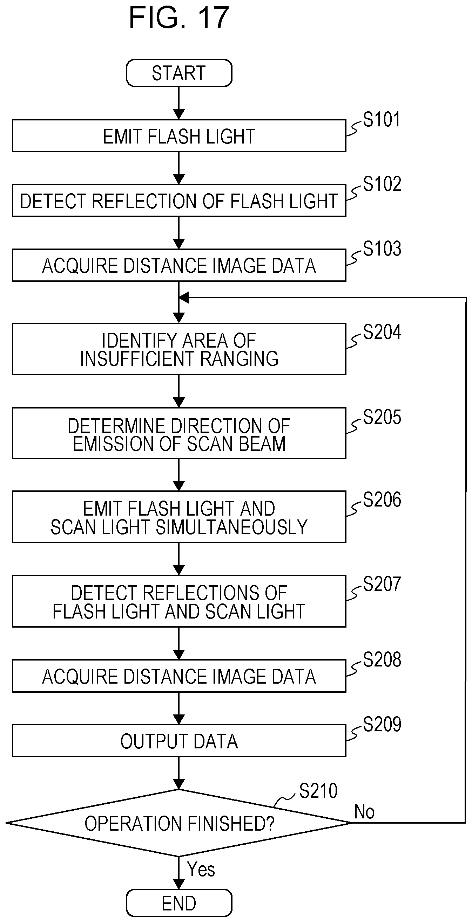

Fig. 17 is a flow chart showing an example of an operation in which a plurality of frame operations are repeated. In the example shown in Fig. 17, as in the example shown in Fig. 5, first, distance image data is generated through the use of the flash light alone (steps S101 to S103). Next, as in the example shown in Fig. 15, a range of illumination with the scan beam is determined, the scan beam and the flash light are simultaneously emitted, and distance image data is generated. (steps S204 to S209). After step S209, the controller 301 judges whether there is an instruction to end the operation (step S210). An instruction to end the operation may be inputted from another apparatus due, for example, to a user's operation. In a case where there is no instruction to end the operation, the operation returns to step S204, and a next range of illumination with the scan beam is determined on the basis of previously-acquired distance image data. The controller 301 repeats the actions of steps S204 to S210 until the controller 301 receives an instruction to end the operation in step S210. The frequency of this repetition may be arbitrarily set depending on the intended use. For example, the foregoing actions may be repeated at a frequency of approximately 30 frames per second (30 fps). In this example, one cycle of the actions of steps S204 to S210 is referred to as "frame operation". The controller 301 repeatedly outputs ranging data in a scene by repeatedly executing a plurality of frame operations. Steps S101 to S103 are not necessarily needed, and step S204 and subsequent steps may be executed by using distance image data acquired in the previous frame operations.

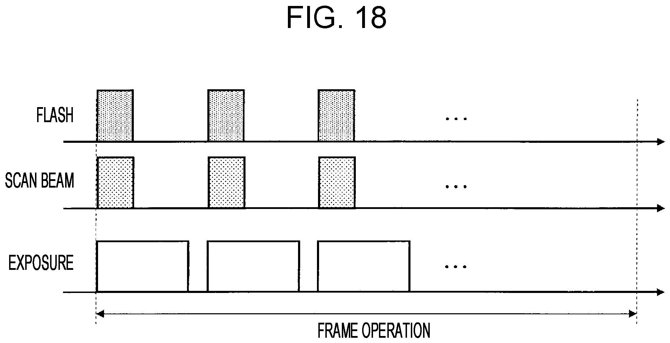

Fig. 18 is a diagram showing examples of timings of emission of the flash light and the scan beam and timings of exposure to the flash light and the scan beam in the modification. In the present modification, the controller 301 causes the light emitting apparatus to simultaneously emit the flash light and the scan beam and causes the image sensor 211 to detect reflections of the flash light and the scan beam within an identical exposure period. Such an operation also makes high-accuracy ranging possible for a region that cannot be subjected to ranging because a reflection of the flash light alone is weak.

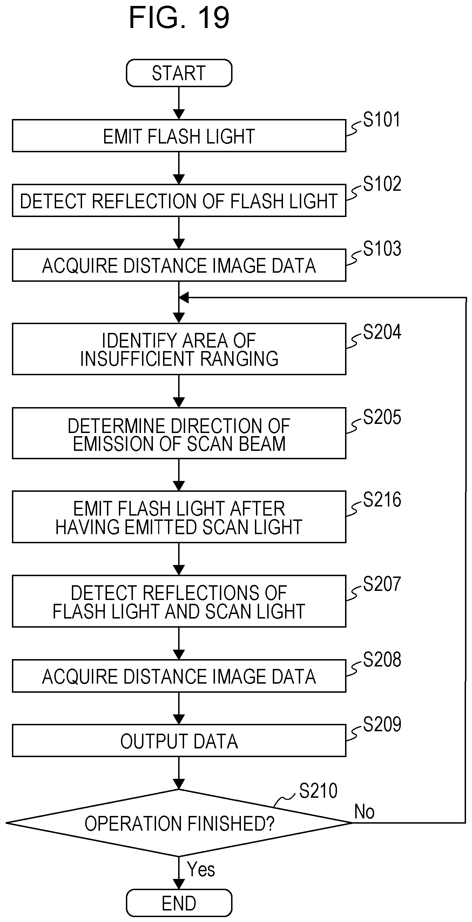

Fig. 19 is a flow chart showing how a ranging apparatus according to another modification operates. The flow chart shown in Fig. 19 is the same as the flow chart shown in Fig. 17, except that step S206 is replaced by step S216. In the present modification too, the controller 301 repeatedly executes a plurality of frame operations. In each frame operation, the controller 301 causes the scan light source 121 to emit the scan light and then causes the flash light source 111 to emit the flash light (step S216). The controller 301 causes reflections of the scan light and the flash light to be detected within an identical exposure period (step S207). In the present modification too, steps S101 to S103 are not necessarily needed, and step S204 and subsequent steps may be executed by using distance image data acquired in the previous frame operations.

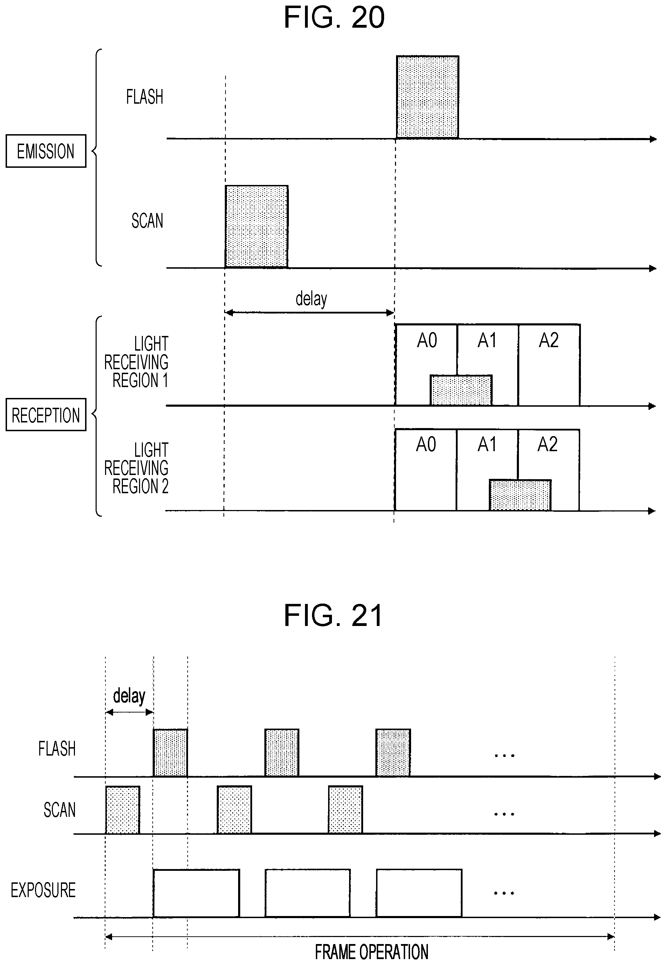

Fig. 20 is a diagram showing timings of emission and reception in the present modification. As illustrated, the flash light is emitted after a predetermined period of delay time has elapsed since the scan beam was emitted. With this, a physical object in a distant place out of the range of measurement of ranging by the flash light can be subjected to ranging within an identical exposure period. The distance of a pixel having received a reflection of the scan light can be calculated by adding, to a computational expression for the distance of a pixel having received a reflection of the flash light, the value of a distance that is calculated by "delay time" × "speed of light". In this example, assuming, for example, that the range of measurement by the flash light is 0 m to 50 m, the pulse duration of the flash light is set to 167 ns. Accordingly, three exposure time windows of 167 ns are provided. In a case where scan light with a pulse duration of 167 ns is emitted 200 ns earlier than the flash light, the distance range of the scan light is 20 to 70 m. Further, in the case of 330 ns, which makes a delay 50 m later, the distance range is 50 m to 100 m. By applying such an exposure operation to a physical object that cannot be subjected to accurate ranging by the flash light, a range of ranging within which ranging is possible can be made larger than in a case where only the flash light is used.

Fig. 21 shows examples of timings of emission of the flush light and the scan beam and timings of exposure to the flush light and the scan beam in a case where exposures are made by emitting the flash light and the scan beam more than once during each frame operation. Thus, in each frame operation, the amount of signal accumulation may be increased be repeating multiple rounds of emission and exposure. In this example, data on each pixel is read out for each frame at the end of a predetermined number of rounds of exposure, and ranging data on that frame is outputted.

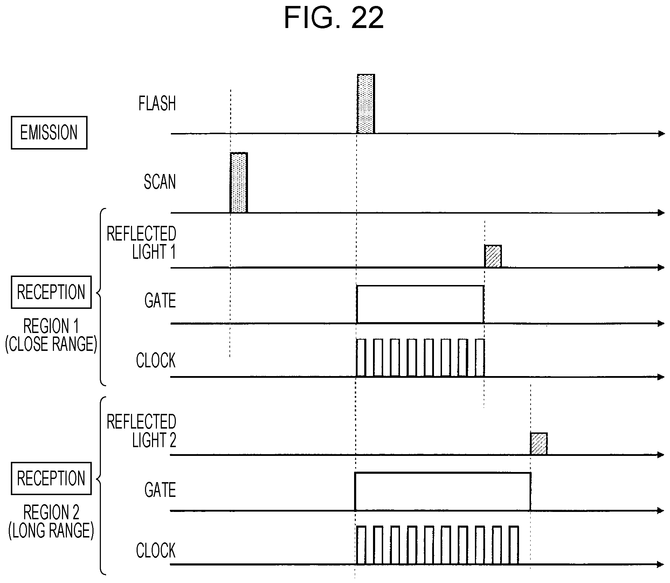

Fig. 22 is a diagram showing examples of timings of emission and reception in a case where ranging based on a direct TOF method is performed in a configuration in which the scan light is emitted earlier than the flash light. In Fig. 22, examples of reflected light pulses, gate signals, and clock pulses in a pixel region that receives a reflection of the flash light and a pixel region that receives a reflection of the scan light are shown. By counting clock pulses in a period from emission of the flash light to reception of reflected light, the time of flight can be measured and the distance can be calculated. As in this example, ranging is possible even in a case where a direct TOF method is used. In this case too, the distance of a pixel having received a reflection of the scan light can be calculated by adding, to a computational expression for the distance of a pixel having received a reflection of the flash light, the value of a distance that is calculated by "delay time" × "speed of light".

### (Embodiment 2)

Next, Embodiment 2 of the present disclosure is described. In the present embodiment, unlike in Embodiment 1, a range of illumination with the scan beam is determined on the basis of luminance image data obtained by illumination with the flash light source 111. For example, the position of a particular physical object such as a pedestrian or a vehicle is identified by image recognition from the luminance image data, and the scan beam is emitted toward the position. Such an operation makes it possible to obtain distance data to the physical object with high accuracy.

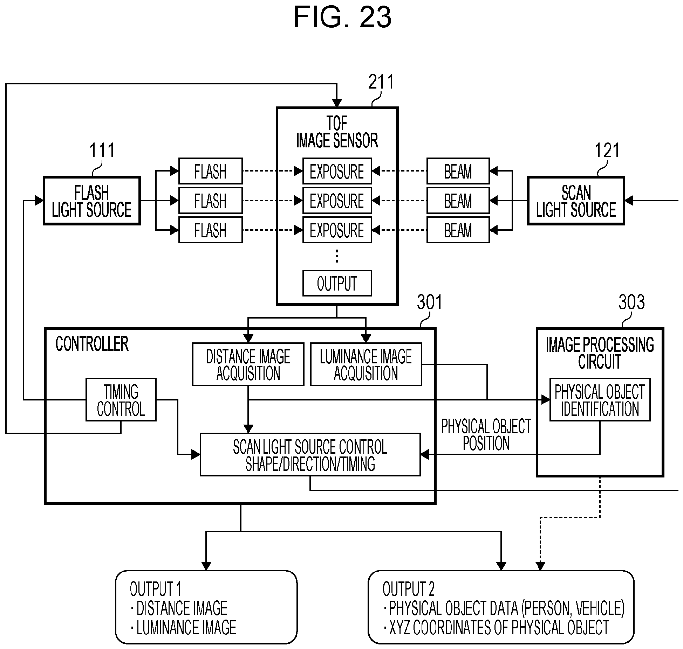

Fig. 23 is a diagram showing a configuration of a ranging apparatus according to the present embodiment. The ranging apparatus according to the present embodiment further includes an image processing circuit 303 in addition to the constituent elements of Embodiment 1. The image sensor 211 is configured to output data on an luminance image in addition to a distance image. The image processing circuit 303 includes a processor for use in image processing such as a GPU (graphic processing unit). The image processing circuit 303 can recognize a particular object from image data. The image processing circuit 303 identifies the position of a particular physical object on the basis of a luminance image and sends, to the controller 301, data representing the position of the physical object. The controller 301 controls the scan light source 121 so that the scan beam is shone on the position. The controller 301 and the image processing circuit 303 may be integrated as one processing circuit.

The controller 301 shown in Fig. 23 separately generates and outputs distance image data and luminance image data on the basis of data outputted from the image sensor 211. The controller 301 also outputs data identifying a physical object such as a person or a vehicle and coordinate data on the physical object. These pieces of data regarding the physical object may be outputted from the image processing circuit 303. The data regarding the physical object may be outputted as data separate from the distance image or the luminance image as illustrated, or may be outputted in combination with the distance image or the luminance image.

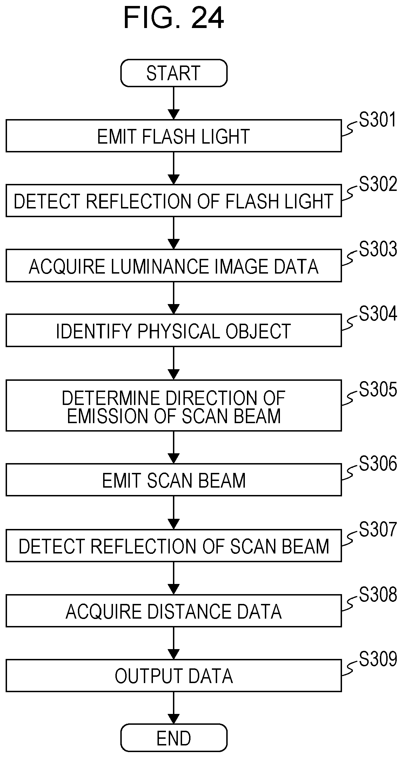

Fig. 24 is a flow chart showing a sequence of actions of one round of ranging operation that is carried out by the ranging apparatus according to the present embodiment. The controller 301 and the image processing circuit 303 generate ranging data on a scene by executing the actions of steps S301 to S309 shown in Fig. 24. The following describes the action of each step.

### (Step S301)

The controller 301 drives the flash light source 111 to emit flash light. The flash light illuminates a comparatively wide first range in a scene.

### (Step S302)

The controller 301 causes the image sensor 211 to perform an exposure and detect a reflection of the flash light. Detection of reflected light occurs for each pixel of the image sensor 211. The image sensor 211 outputs luminance image data containing luminance data representing the reflected light intensity of each pixel. As in the case of Embodiment 1, the image sensor 211 may also output distance image data. In the present embodiment too, a distance can be calculated for each pixel by utilizing a direct or indirect TOF technique. Signals representing each pixel may be accumulated by repeating illumination with the flash light and exposure by the image sensor more than once. Such an operation makes it possible to bring about improvement in SN.

### (Step S303)

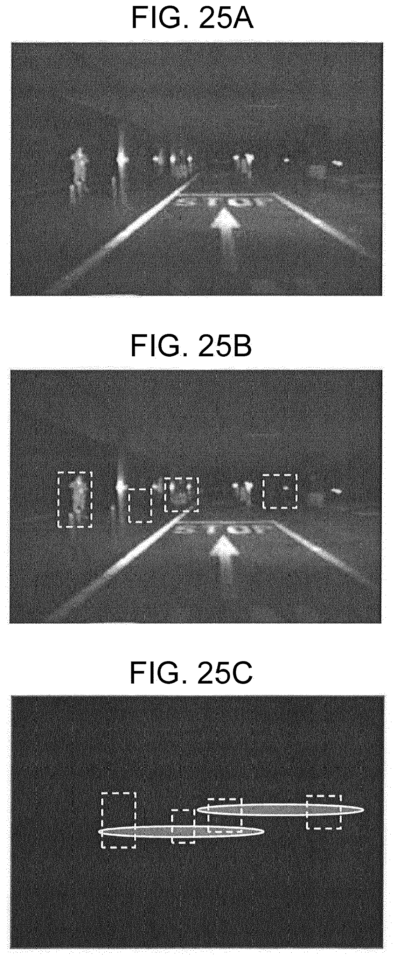

The controller 301 acquires luminance image data outputted from the image sensor 211. Fig. 25A is a diagram showing an example of a luminance image. As shown in this example, an image representing a luminance distribution within a first region is generated and stored in the memory 330. This luminance image data is sent to the image processing circuit 303.

### (Step S304)

The image processing circuit 303 detects, from the luminance image data, one or more physical objects that should be subjected to ranging. As a physical object, for example, a person, a car, or an unidentifiable unknown object may be selected. The image processing circuit 303 can identify a particular physical object on the basis of a feature of an image, for example, by using a publicly-known image recognition technique. In the present embodiment, image data can be acquired even during the night, as the luminance image data is acquired with the flash light shone. A usable example of the flash light source 111 is a headlight of a vehicle. The luminance image data may be acquired, for example, by using, instead of the headlight, a light source that emits near-infrared light. Fig. 25B is a diagram showing examples of areas in the luminance image in which particular physical objects are present. In this drawing, the areas of a plurality of physical objects are indicated by dashed frames. As in this example, the image processing circuit 303 identifies the position of one or more physical objects from the scene and sends, to the controller 301, data representing the position coordinates.

### (Step S305)

The controller 301 determines the direction of emission of the scan beam on the basis of positional data on a physical object. The direction of emission is set to such a direction that at least part of a region in which an identified physical object is present (i.e. a second range) is illuminated with the scan beam. The controller 301 may adjust the beam shape and/or the beam diameter as well as the direction of the scan beam according to the distribution of second ranges.

### (Step S306)

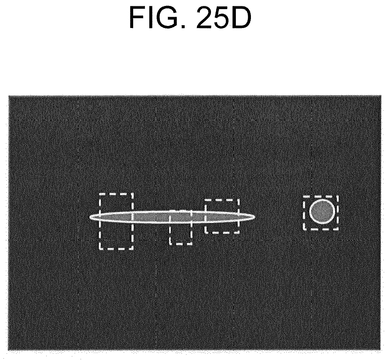

The controller 301 instructs the scan light source 121 to emit the scan beam in the direction of emission thus determined. This causes at least part of the second range to be illuminated with the scan beam. In a case where one round of emission of the scan beam is insufficient in light quantity, signals may be accumulated by repeating an exposure by emitting the scan beam more than once in the same direction. Fig. 25C is a diagram showing examples of ranges of illumination with scan beams. In Fig. 25C, examples of ranges of illumination with scan beams are expressed by ellipses. In Fig. 25C, two ranges of illumination with two scan beams of different directions are illustrated. The controller 301 may cause the entire second range to be illuminated by repeatedly emitting the scan beam in varying directions. Alternatively, a plurality of scan beams may be simultaneously emitted in different directions. Fig. 25D is a diagram showing other examples of ranges of illumination with scan beams. This example shows how detected physical objects are illuminated with a plurality of scan beams of different beam shapes. As in this example, the beam shape may be changed according to the size of a second range or the distribution of second ranges. For example, since a person and an automobile are different in size, the spot size of the beam may be changed according to the size. Exercising such control makes it possible to obtain necessary and sufficient ranging data on a physical object. Although, in the examples shown in Figs. 25C and 25D, one beam is shone on a plurality of physical objects, one beam may be emitted for each physical object.

### (Step S307)

The controller 301 causes the image sensor 211 to detect a reflection of the scan beam and output distance data on the range of illumination with the scan beam. In a case where the scan beam is emitted more than once, an exposure is performed each time the scan beam is emitted. In that case, the actions of steps S305 to S307 are repeated until a scan is completed.

### (Step S308)

The controller 301 acquires the distance data on the second range as generated by the image sensor 211. This distance data is data representing the value of distances for a plurality of pixels corresponding to the second range illuminated with the scan beam.

### (Step S309)

The controller 301 generates and outputs output data on the basis of the luminance image data acquired in step S303 and the distance data acquired in step S308. This output data may contain a luminance distribution of the scene and distance and position information on each physical object. Data representing a distance distribution of the scene may be contained in the output data. For example, in a case where the image sensor 211 is configured to generate distance image data in addition to the luminance image data in step S303, the distance image data may be incorporated into the output data.

The ranging apparatus can output two types of data, namely distance image data and luminance image data, each time the ranging apparatus repeats the operation shown in Fig. 24. The distance image data and the luminance image data may each be outputted as one frame of data, or may be outputted one integrated frame of data. In the present embodiment too, three-dimensional point group data may be contained in the output data.

The foregoing operation makes it possible to effectively acquire distance data on a particular physical object recognized from a luminance image. For example, in a case where the ranging apparatus is used as a sensor for automated driving, ranging targeted at a moving object such as a person or a vehicle can be done. By performing ranging with the scan light aimed at such a moving physical object, movements can be tracked. From the movements, the direction (e.g. velocity vector) in which the physical object is moving can be calculated. On the basis of the velocity vector, a prediction of movement can be made. Since such a movement prediction is possible, automatic traveling can be smoothly performed without an excessive reduction in speed. Further, in a case where a physical object needs to be examined in more detail, a similar technique can be applied. For example, as for an unknown obstacle on a road surface, the size of the obstacle or the distance to the obstacle may not be determined from an image alone. This problem can be addressed by calculating the outer size by measuring the distance with the scan light and checking it against a result of imaging. This makes it possible, for example, to judge whether to avoid or not to avoid the obstacle.

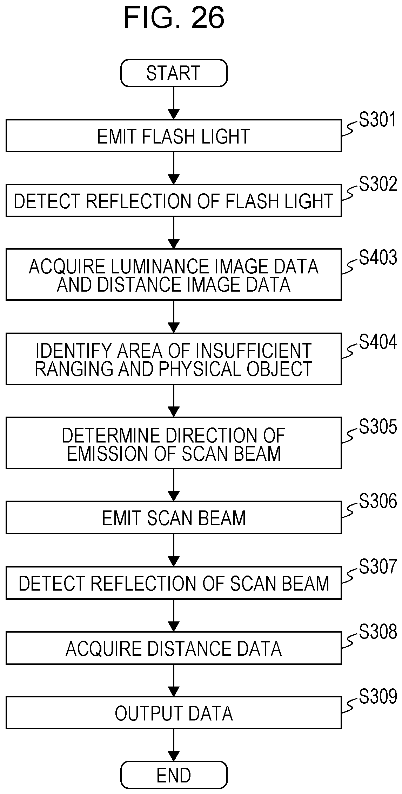

Fig. 26 is a flow chart showing an operation according to a modification of the present embodiment. This flow chart is the same as the flow chart shown in Fig. 24, except that steps S303 and S304 are replaced by steps S403 and S404, respectively. In the present modification, in step S403, both luminance image data and distance image data are acquired from the image sensor 211. In step S304, the image processing circuit 303 identifies an area of insufficient ranging from the distance image data and identifies a particular physical object from the luminance image data. The area of insufficient ranging is identified in the same way as in step S104 of Fig. 5. The image processing circuit 303 sends, to the controller 301, positional data on the area of insufficient ranging and an area in which the particular physical object is present. In step S305, the controller 301 determines the direction of emission, beam shape, beam size, or other attributes of the scan beam on the basis of the positional data on the areas thus acquired.

According to the present modification, a region that requires more detailed ranging can be subjected to ranging with higher accuracy on the basis of both luminance image data and distance image data. For example, ranging aimed at a person or car whose movements should be predicted by tracking or a physical object whose size needs to be identified can be performed while a general picture is being captured by ranging with the flash light. This makes it possible to smoothly perform automatic driving without an excessive reduction in speed, for example, in a case where the ranging apparatus is used as a sensor for use in a self-guided vehicle.

The configurations and operations of the foregoing embodiments can be appropriately combined within the realm of possibility. For example, the operation of Embodiment 2 may be combined with a scan operation such as that shown in Fig. 7, a periodic frame operation such as that shown in Fig. 17, or simultaneous illumination with the flash light and the scan light.

Although, in the foregoing embodiments, a luminance image and a distance image are acquired by one image sensor 211, they may be acquired by two image sensors. That is, the ranging apparatus may include a first image sensor that generates luminance image data and a second image sensor that generates distance image data.

As noted above, a ranging apparatus according to one aspect of the present disclosure includes a light emitting apparatus that is capable of emitting multiple types of light having different extents of divergence, a light receiving apparatus that detects reflected light based on the light emitted by the light emitting apparatus, and a processing circuit that controls the light emitting apparatus and the light receiving apparatus and that processes a signal outputted from the light receiving apparatus. The processing circuit causes the light emitting apparatus to emit first light that illuminates a first range in a scene. The processing circuit causes the light receiving apparatus to detect first reflected light produced by illumination with the first light and output first detection data. The processing circuit determines, on the basis of the first detection data, one or more second ranges that are narrower than the first range. The processing circuit causes the light emitting apparatus to emit second light that illuminates the second ranges and that is smaller in extent of divergence than the first light. The processing circuit causes the light receiving apparatus to detect second reflected light produced by illumination with the second light and output second detection data. The processing circuit generates and outputs distance data on the second regions on the basis of the second detection data.

The foregoing ranging apparatus makes it also possible to more highly accurately measure the distance to a region the distance to which cannot be measured with sufficient accuracy in a case where only the first light is used. Furthermore, necessary distance data can be more quickly acquired than in a configuration in which distance data on the whole scene is acquired by scanning the whole scene with the second light. This makes it possible to quickly acquire highly-reliable distance data.

The first light may for example be flash light. The second light may be an optical beam that illuminates a range included in a range of illumination with the flash light. The flash light may for example be light produced by a headlight of a vehicle. Using the flash light makes it possible, for example, to acquire a wide range of first detection data even during the night.

The light receiving apparatus may include an image sensor that generates at least either distance image data on the first range or luminance image data on the first range as the first detection data. Using a light receiving apparatus including such an image sensor makes it possible to determine, on the basis of the distance image data or luminance image data on the first range, a second range that requires more detailed ranging.

The image sensor may generate the distance image data on the first range. The processing circuit may determine the second ranges on the basis of the distance image data on the first range. This makes it possible to determine, on the basis of the distance image data on the first range, a second range that requires more detailed ranging. For example, a range in which the accuracy of ranging is insufficient can be determined as a second range.

The processing circuit may integrate the distance image data on the first range as acquired by using the first light and the distance image data on the second ranges as acquired by using the second light into one frame of distance image data and output the one frame of distance image data. This makes it possible to acquire integrated distance image data of high accuracy.

The image sensor may generate the luminance image data on the first range. The processing circuit may determine the second ranges on the basis of the luminance image data on the first range. This makes it possible to determine, on the basis of the luminance image data on the first range, a second range that requires more detailed ranging. For example, a range in which a particular physical object recognized from the luminance image data is present can be determined as a second range.

The image sensor may generate both the distance image data on the first range and the luminance image data on the first range. The processing circuit may determine the second ranges on the basis of the distance image data on the first range and the luminance image data on the first range. With this, for example, a range, determined on the basis of the distance image data, in which ranging is insufficient and a range, determined on the basis of the luminance image data, in which a particular physical object is present can be determined as second ranges.

The processing circuit may identify, on the basis of the luminance image data on the first range, one or more physical objects that are present in the first range and determine the second ranges so that the second light is shone on the one or more physical objects.

The image sensor may include an electronic shutter of a global shutter mode. In a case where the electronic shutter is of a global shutter mode, two-dimensional information can be acquired at once by controlling the turning on and turning off of the shutter in synchronization with the first light.

The processing circuit may cause the light emitting apparatus and the light receiving apparatus to repeatedly execute an operation of emitting the first light at least once and detecting the first reflected light and an operation of emitting the second light at least once and detecting the second reflected light. This makes it possible to repeatedly generate distance data on the scene.

The operation of emitting the second light may include an operation of emitting the second light more than once in different directions. This makes it possible to scan the second ranges with the second light.

The processing circuit may cause the light emitting apparatus to simultaneously emit the first light and the second light more than once. The second ranges may be determined on the basis of the first detection data acquired by earlier illumination with the first light.

The processing circuit may cause the light emitting apparatus and the light receiving apparatus to repeatedly execute an operation of emitting the second light, then emitting the first light, and then detecting the first reflected light and the second reflected light within an identical exposure period. The second ranges may be determined on the basis of the first detection data acquired by earlier illumination with the first light.

The light emitting apparatus may include a first light source that emits the first light and a second light source that emits the second light.

A method according to another aspect of the present disclosure includes causing a light emitting apparatus to emit first light that illuminates a first range in a scene, causing a light receiving apparatus to detect first reflected light produced by illumination with the first light and output first detection data, determining, on the basis of the first detection data, one or more second regions that are narrower than the first range, causing the light emitting apparatus to emit second light that illuminates the second ranges and that is smaller in extent of divergence than the first light, causing the light receiving apparatus to detect second reflected light produced by illumination with the second light and output second detection data, and generating and outputting distance data on the second ranges on the basis of the second detection data.

In a system including a light emitting apparatus, a light receiving apparatus, and a processing circuit that controls the light emitting apparatus and the light receiving apparatus and that processes a signal outputted from the light receiving apparatus, a computer program according to still another aspect of the present disclosure is executed by the processing circuit. The computer program causes a processor of the processing circuit to execute operations including causing the light emitting apparatus to emit first light that illuminates a first range in a scene, causing the light receiving apparatus to detect first reflected light produced by illumination with the first light and output first detection data, determining, on the basis of the first detection data, one or more second regions that are narrower than the first range, causing the light emitting apparatus to emit second light that illuminates the second ranges and that is smaller in extent of divergence than the first light, causing the light receiving apparatus to detect second reflected light produced by illumination with the second light and output second detection data, and generating and outputting distance data on the second ranges on the basis of the second detection data.

### Industrial Applicability

The technologies disclosed here are widely applicable to ranging apparatuses or systems. For example, the technologies disclosed here may be used as constituent elements of a lidar system.

### Reference Signs List

- 100: light emitting apparatus
- 110: first light source
- 111: flash light source
- 120: second light source
- 121: scan light source
- 200: light receiving apparatus
- 210, 211: image sensor
- 300: processing circuit
- 301: controller
- 303: image processing circuit
- 330: memory

## Claims

1. A ranging apparatus comprising:
a light emitting apparatus that is capable of emitting multiple types of light having different extents of divergence;
a light receiving apparatus that detects reflected light based on the light emitted by the light emitting apparatus; and
a processing circuit that controls the light emitting apparatus and the light receiving apparatus and that processes a signal outputted from the light receiving apparatus,
wherein
the processing circuit causes the light emitting apparatus to emit first light that illuminates a first range in a scene,
the processing circuit causes the light receiving apparatus to detect first reflected light produced by illumination with the first light and output first detection data,
the processing circuit determines, on the basis of the first detection data, one or more second ranges that are narrower than the first range,
the processing circuit causes the light emitting apparatus to emit second light that illuminates the second ranges and that is smaller in extent of divergence than the first light,
the processing circuit causes the light receiving apparatus to detect second reflected light produced by illumination with the second light and output second detection data, and
the processing circuit generates and outputs distance data on the second regions on the basis of the second detection data.

2. The ranging apparatus according to claim 1, wherein
the first light is flash light, and
the second light is an optical beam that illuminates a range included in a range of illumination with the flash light.

3. The ranging apparatus according to claim 1 or 2, wherein the light receiving apparatus includes an image sensor that generates at least either distance image data on the first range or luminance image data on the first range as the first detection data.

4. The ranging apparatus according to claim 3, wherein
the image sensor generates the distance image data on the first range, and
the processing circuit determines the second ranges on the basis of the distance image data on the first range.

5. The ranging apparatus according to claim 4, wherein the processing circuit integrates the distance image data on the first range as acquired by using the first light and the distance image data on the second ranges as acquired by using the second light into one frame of distance image data and outputs the one frame of distance image data.

6. The ranging apparatus according to claim 3, wherein
the image sensor generates the luminance image data on the first range, and
the processing circuit determines the second ranges on the basis of the luminance image data on the first range.

7. The ranging apparatus according to claim 3, wherein
the image sensor generates both the distance image data on the first range and the luminance image data on the first range, and
the processing circuit determines the second ranges on the basis of the distance image data on the first range and the luminance image data on the first range.

8. The ranging apparatus according to claim 6 or 7, wherein the processing circuit identifies, on the basis of the luminance image data on the first range, one or more physical objects that are present in the first range and determines the second ranges so that the second light is shone on the one or more physical objects.

9. The ranging apparatus according to any of claims 3 o 8, wherein the image sensor includes an electronic shutter of a global shutter mode.

10. The ranging apparatus according to any of claims 1 to 9, wherein the processing circuit causes the light emitting apparatus and the light receiving apparatus to repeatedly execute an operation of emitting the first light at least once and detecting the first reflected light and an operation of emitting the second light at least once and detecting the second reflected light.

11. The ranging apparatus according to claim 10, wherein the operation of emitting the second light includes an operation of emitting the second light more than once in different directions.

12. The ranging apparatus according to any of claims 1 to 11, wherein
the processing circuit causes the light emitting apparatus to simultaneously emit the first light and the second light more than once, and
the second ranges are determined on the basis of the first detection data acquired by earlier illumination with the first light.

13. The ranging apparatus according to any of claims 1 to 11, wherein
the processing circuit causes the light emitting apparatus and the light receiving apparatus to repeatedly execute an operation of emitting the second light, then emitting the first light, and then detecting the first reflected light and the second reflected light within an identical exposure period, and
the second ranges are determined on the basis of the first detection data acquired by earlier illumination with the first light.

14. The ranging apparatus according to any of claims 1 to 13, wherein
the light emitting apparatus includes
a first light source that emits the first light, and
a second light source that emits the second light.

15. A method comprising:
causing a light emitting apparatus to emit first light that illuminates a first range in a scene;
causing a light receiving apparatus to detect first reflected light produced by illumination with the first light and output first detection data;
determining, on the basis of the first detection data, one or more second regions that are narrower than the first range;
causing the light emitting apparatus to emit second light that illuminates the second ranges and that is smaller in extent of divergence than the first light;
causing the light receiving apparatus to detect second reflected light produced by illumination with the second light and output second detection data; and
generating and outputting distance data on the second ranges on the basis of the second detection data.

16. A computer program that, in a system including a light emitting apparatus, a light receiving apparatus, and a processing circuit that controls the light emitting apparatus and the light receiving apparatus and that processes a signal outputted from the light receiving apparatus, is executed by the processing circuit and causes a processor of the processing circuit to execute operations comprising:
causing the light emitting apparatus to emit first light that illuminates a first range in a scene;
causing the light receiving apparatus to detect first reflected light produced by illumination with the first light and output first detection data;
determining, on the basis of the first detection data, one or more second regions that are narrower than the first range;
causing the light emitting apparatus to emit second light that illuminates the second ranges and that is smaller in extent of divergence than the first light;
causing the light receiving apparatus to detect second reflected light produced by illumination with the second light and output second detection data; and
generating and outputting distance data on the second ranges on the basis of the second detection data.
